(19) Europäisches Patentamt
European Patent Office
Office européen des brevets

(11) EP 4 239 726 A1

(12) **EUROPEAN PATENT APPLICATION**
published in accordance with Art. 153(4) EPC

(43) Date of publication:
**06.09.2023 Bulletin 2023/36**

(21) Application number: **21885942.9**

(22) Date of filing: **15.10.2021**

(51) International Patent Classification (IPC):
***H01M 4/62*** *(2006.01)* ***H01G 11/06*** *(2013.01)*
***H01G 11/18*** *(2013.01)* ***H01G 11/30*** *(2013.01)*

(52) Cooperative Patent Classification (CPC):
**H01G 11/06; H01G 11/18; H01G 11/30; H01M 4/62;**
Y02E 60/10

(86) International application number:
**PCT/JP2021/038308**

(87) International publication number:
**WO 2022/091823 (05.05.2022 Gazette 2022/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.10.2020 JP 2020183244**

(71) Applicant: **Zeon Corporation**
**Tokyo 100-8246 (JP)**

(72) Inventors:
- **MIYAZAKI Akihiko**
**Tokyo 100-8246 (JP)**
- **MOSAKI Shiho**
**Tokyo 100-8246 (JP)**

(74) Representative: **Maiwald GmbH**
**Elisenhof**
**Elisenstraße 3**
**80335 München (DE)**

# (54) ELECTRODE FOR ELECTROCHEMICAL ELEMENTS, AND ELECTROCHEMICAL ELEMENT

(57) Provided is an electrode for an electrochemical device that can sufficiently inhibit heat generation in the event of an internal short circuit and reduce IV resistance in an electrochemical device. The electrode includes a current collector and an electrode mixed material layer. The electrode mixed material layer contains an electrode active material, a binder, and a foaming agent having a thermal decomposition temperature of 150°C to 400°C. In a thickness direction cross-section of the electrode mixed material layer, thermally decomposable sites formed of the foaming agent and having a circumscribed circle diameter of 1.0 μm to 10.0 μm are present, and a number A of the thermally decomposable sites per 50 $\mu m^2$ in a surface region of the electrode mixed material layer is larger than a number B of the thermally decomposable sites per 50 $\mu m^2$ in a deep region of the electrode mixed material layer.

FIG. 1

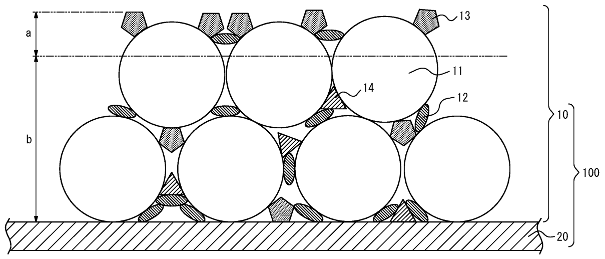


EP 4 239 726 A1

## Description

TECHNICAL FIELD

The present disclosure relates to an electrode for an electrochemical device and an electrochemical device.

BACKGROUND

Electrochemical devices such as lithium ion secondary batteries, electric double-layer capacitors, and lithium ion capacitors have characteristics such as compact size, light weight, high energy-density, and the ability to be repeatedly charged and discharged, and are used in a wide variety of applications.

An electrode used in an electrochemical device may be an electrode that includes a current collector and an electrode mixed material layer formed on the current collector. The electrode mixed material layer typically has a configuration in which an electrode active material is bound using a binder.

Thermal runaway may occur in an electrochemical device as a result of an internal short circuit between electrodes. For this reason, attempts have been made to inhibit heat generation and ensure safety in an electrochemical device even when there is an internal short circuit between electrodes.

For example, Patent Literature (PTL) 1 discloses a positive electrode that includes a current collector and a positive electrode mixed material layer and in which the positive electrode mixed material layer contains a positive electrode active material and a melamine-acid salt that is a salt of melamine and an acid. According to PTL 1, safety of a non-aqueous electrolyte solution can be ensured and input-output characteristics and charge-discharge efficiency can be enhanced by using this positive electrode.

CITATION LIST

Patent Literature

PTL 1: WO2014/119315A1

SUMMARY

(Technical Problem)

However, there is room for further improvement in the conventional technique described above in terms of even further inhibiting heat generation in the event of an internal short circuit of an electrochemical device while also reducing IV resistance and improving device characteristics of the electrochemical device.

Accordingly, an object of the present disclosure is to provide a new technique that can sufficiently inhibit heat generation in the event of an internal short circuit of an electrochemical device while also reducing IV resistance of the electrochemical device.

(Solution to Problem)

The inventors conducted diligent investigation with the aim of solving the problem set forth above. The inventors discovered that when a foaming agent having a thermal decomposition temperature that is within a specific range is contained together with an electrode active material and a binder in an electrode mixed material layer formed on a current collector and when the foaming agent is disposed such as to satisfy a specific condition, it is possible to sufficiently inhibit heat generation in the event of an internal short circuit of an electrochemical device and to reduce IV resistance of the electrochemical device. In this manner, the inventors completed the present disclosure.

Specifically, the present disclosure aims to advantageously solve the problem set forth above, and a presently disclosed electrode for an electrochemical device comprises: a current collector; and an electrode mixed material layer formed on the current collector, wherein the electrode mixed material layer contains an electrode active material, a binder, and a foaming agent having a thermal decomposition temperature of not lower than 150°C and not higher than 400°C, and in a cross-section of the electrode mixed material layer in a thickness direction, thermally decomposable sites formed of the foaming agent and having a circumscribed circle diameter of not less than 1.0 μm and not more than 10.0 μm are present, and a number A of the thermally decomposable sites per 50 $\mu m^2$ in a surface region of the electrode mixed material layer that is from 0% to 10% in the thickness direction with a surface at an opposite side to the current collector as a reference is larger than a number B of the thermally decomposable sites per 50 $\mu m^2$ in a deep region of the electrode mixed material layer that is from 0% to 90% in the thickness direction with a surface at a side corresponding

to the current collector as a reference. When an electrode mixed material layer contains a foaming agent having the thermal decomposition temperature set forth above, when thermally decomposable sites formed of the foaming agent and having the size set forth above are present in a cross-section of the electrode mixed material layer (hereinafter, also referred to simply as a "mixed material layer cross-section"), and when more of the thermally decomposable sites are disposed in a surface region than in a deep region in the mixed material layer cross-section in this manner, it is possible to sufficiently inhibit heat generation in the event of an internal short circuit of an electrochemical device while also reducing IV resistance of the electrochemical device.

The "foaming agent" referred to in the present disclosure is a compound that releases an incombustible gas such as nitrogen, carbon dioxide, ammonia, or water vapor through thermal decomposition.

The "thermal decomposition temperature" of the foaming agent referred to in the present disclosure can be measured by a method described in the EXAMPLES section.

Analysis of a thickness direction cross-section of an electrode mixed material layer referred to in the present disclosure can be performed through a device (SEM-EPMA) that performs observation using a scanning electron microscope (SEM) and that performs elemental analysis through an electron probe micro-analyzer (EPMA). Specifically, through a method using an SEM-EPMA that is described in the EXAMPLES section, it is possible to confirm the presence or absence of "thermally decomposable sites formed of a foaming agent and having a circumscribed circle diameter of not less than 1.0 μm and not more than 10.0 μm" in a mixed material layer cross-section and to determine the "number A of thermally decomposable sites per 50 $\mu m^2$" in a "surface region" and the "number B of thermally decomposable sites per 50 $\mu m^2$" in a "deep region".

In the presently disclosed electrode for an electrochemical device, the number A is preferably not less than 3 and not more than 50. When the number A of thermally decomposable sites per 50 $\mu m^2$ in the surface region of the mixed material layer cross-section is within the range set forth above, it is possible to achieve a good balance of inhibiting heat generation in the event of an internal short circuit of an electrochemical device and reducing IV resistance of the electrochemical device.

In addition, in the presently disclosed electrode for an electrochemical device, a ratio of the number A relative to the number B is preferably more than 1.1 and less than 30. When the ratio of the number A relative to the number B (hereinafter, also abbreviated as "A/B") is within the range set forth above, it is possible to achieve a good balance of inhibiting heat generation in the event of an internal short circuit of an electrochemical device and reducing IV resistance of the electrochemical device.

In the presently disclosed electrode for an electrochemical device, the binder is preferably a polymer including one or more functional groups selected from the group consisting of a carboxy group, a hydroxyl group, a nitrile group, an amino group, an epoxy group, an oxazoline group, a sulfo group, an ester group, and an amide group. When a polymer that includes at least any one of the functional groups set forth above is used as the binder, peel strength of the electrode can be further increased, and IV resistance of an electrochemical device can be even further reduced.

In the presently disclosed electrode for an electrochemical device, the foaming agent is preferably a nitrogenous foaming agent. When a nitrogenous foaming agent is used as the foaming agent, it is possible to further inhibit heat generation in the event of an internal short circuit of an electrochemical device while also further reducing IV resistance of the electrochemical device.

Note that the term "nitrogenous foaming agent" as used in the present disclosure refers to a foaming agent that releases nitrogen as an incombustible gas through thermal decomposition.

Moreover, the present disclosure aims to advantageously solve the problem set forth above, and a presently disclosed electrochemical device comprises any one of the presently disclosed electrodes for an electrochemical device set forth above. An electrochemical device that includes any one of the presently disclosed electrodes set forth above has excellent safety because heat generation in the event of an internal short circuit is sufficiently inhibited. In addition, this electrochemical device has low IV resistance and excellent device characteristics.

(Advantageous Effect)

According to the present disclosure, it is possible to provide an electrode for an electrochemical device that can sufficiently inhibit heat generation in the event of an internal short circuit of an electrochemical device and reduce IV resistance of the electrochemical device.

Moreover, according to the present disclosure, it is possible to provide an electrochemical device in which heat generation in the event of an internal short circuit is sufficiently inhibited and that has low IV resistance.

BRIEF DESCRIPTION OF THE DRAWING

In the accompanying drawing:

FIG. 1 is a cross-sectional view schematically illustrating one example of a thickness direction cross-section of an

electrode for an electrochemical device according to the present disclosure.

DETAILED DESCRIPTION

The following provides a detailed description of embodiments of the present disclosure.

The presently disclosed electrode for an electrochemical device is an electrode that can be used as an electrode of an electrochemical device such as a lithium ion secondary battery, an electric double-layer capacitor, or a lithium ion capacitor.

Moreover, the presently disclosed electrochemical device is an electrochemical device that includes the presently disclosed electrode for an electrochemical device.

(Electrode for electrochemical device)

The presently disclosed electrode includes at least an electrode mixed material layer and a current collector. Note that the presently disclosed electrode may include configurations other than the electrode mixed material layer and the current collector. For example, the presently disclosed electrode may include a known adhesive layer and/or heat-resistant layer on the electrode mixed material layer. Moreover, the presently disclosed electrode may include an electrode mixed material layer at just one side of the current collector or may include electrode mixed material layers at both sides of the current collector.

The presently disclosed electrode can sufficiently inhibit heat generation in the event of an internal short circuit of an electrochemical device and reduce IV resistance of the electrochemical device as a result of the electrode mixed material layer being a specific electrode mixed material layer that is described below.

Note that in a case in which the presently disclosed electrode includes electrode mixed material layers at both sides of the current collector, the above-described effects relating to an electrochemical device can be sufficiently displayed so long as at least one of the electrode mixed material layers is the specific electrode mixed material layer described below.

In order to display the above-described effects, the electrode mixed material layer that is included in the presently disclosed electrode has thermally decomposable sites formed of a foaming agent and having a circumscribed circle diameter of not less than 1.0 $\mu$m and not more than 10.0 $\mu$m in a mixed material layer cross-section thereof. When the mixed material layer cross-section is divided into a surface region at the opposite side to the current collector (region of electrode mixed material layer from 0% to 10% in thickness direction with surface at opposite side to current collector as reference) and a deep region (region of electrode mixed material layer from 0% to 90% in thickness direction with surface at current collector side as reference), which is a region other than the surface region, a number A (sites/50 $\mu m^2$) of thermally decomposable sites in the surface region is required to be larger than a number B (sites/50 $\mu m^2$) of thermally decomposable sites in the deep region.

Although it is not clear why heat generation in the event of an internal short circuit of an electrochemical device can be sufficiently inhibited and IV resistance of the electrochemical device can be reduced as a result of the electrode mixed material layer containing a foaming agent and as a result of thermally decomposable sites formed of the foaming agent having the specific size set forth above and being present in a larger number in a surface region than a deep region in a mixed material layer cross-section, the reason for this is presumed to be as follows.

Firstly, in a situation in which thermal runaway occurs and temperature rises inside an electrochemical device in which an electrode that includes an electrode mixed material layer containing a foaming agent is used, the foaming agent in the electrode mixed material layer decomposes (foams) to form incombustible gas. This release of incombustible gas can dilute combustible gas released by electrolyte solution decomposition or the like caused by the high temperature, and thus can prevent spreading of fire. Moreover, foaming of the foaming agent and release of incombustible gas cause destruction of electrode structure (for example, detachment of an electrode active material from a current collector) and cutting of electrical conduction paths. As a result, it is possible to inhibit generation of Joule heat and suppress further temperature rise inside of the electrochemical device.

The inventors conducted further investigation and focused on the fact that the size and disposition of a foaming agent in an electrode mixed material layer are important for causing foaming of the foaming agent at an appropriate timing during thermal runaway while also sufficiently ensuring electrical contact among an electrode active material during normal operation of an electrochemical device and causing the electrochemical device to display good device characteristics.

In the electrode mixed material layer included in the presently disclosed electrode, the circumscribed circle diameter of thermally decomposable sites formed of the foaming agent that are confirmed in a mixed material layer cross-section is not less than 1.0 $\mu$m and not more than 10.0 $\mu$m. When the thermally decomposable sites are of this size, the foaming agent at these sites does not excessively form aggregates/microbodies and can be caused to foam at an appropriate timing during thermal runaway while also not significantly impairing electrical contact among an electrode

active material. Moreover, in the electrode mixed material layer included in the presently disclosed electrode, more thermally decomposable sites are present in the surface region that constitutes 10% of the electrode mixed material layer in the thickness direction than in the deep region that constitutes 90% of the electrode mixed material layer in the thickness direction. In other words, this means that the foaming agent is present in high density at a surface side of the electrode mixed material layer (opposite side to the current collector). Moreover, in such an electrode mixed material layer, the foaming agent that can potentially impair electrical contact among an electrode active material does not excessively cover the electrode active material.

It is thought that for the reasons set forth above, the use of the presently disclosed electrode having the specific electrode mixed material layer makes it possible to sufficiently inhibit heat generation in the event of an internal short circuit of an electrochemical device and reduce IV resistance of the electrochemical device.

One example of the structure of the presently disclosed electrode is described using FIG. 1. In FIG. 1, the dimensions of some configurations are enlarged or reduced in order to facilitate understanding.

FIG. 1 is a cross-sectional view schematically illustrating one example of a thickness direction (i.e., a stacking direction of electrode mixed material layer 10 and current collector 20) cross-section of an electrode 100 for an electrochemical device according to the present disclosure. In FIG. 1, the electrode 100 for an electrochemical device has an electrode mixed material layer 10 stacked on a current collector 20. The electrode mixed material layer 10 contains an electrode active material 11 and a binder 12, and also contains a foaming agent 13. The foaming agent 13 forms thermally decomposable sites. In the example illustrated in FIG. 1, the electrode mixed material layer 10 contains a conductive material 14.

When the electrode mixed material layer 10 is divided into a surface region a and a deep region b, the number A (sites/50 $\mu m^2$) of thermally decomposable sites in the surface region a is required to be larger than the number B (sites/50 $\mu m^2$) of thermally decomposable sites in the deep region b as previously described.

It should be noted that the presently disclosed electrode is not limited to the example illustrated in FIG. 1. For example, a covering site formed of a surfactant that covers at least part of the perimeter of a thermally decomposable site 13 may be present in the electrode mixed material layer 10. Moreover, a known adhesive layer and/or heat-resistant layer such as previously described may be stacked further above the electrode mixed material layer 10, for example.

<Electrode mixed material layer>

The electrode mixed material layer contains an electrode active material, a binder, and a foaming agent and may optionally contain a surfactant and/or other components.

The electrode mixed material layer is required to have thermally decomposable sites formed of the foaming agent and having a circumscribed circle diameter of 1.0 $\mu m$ to 10.0 $\mu m$ present in a mixed material layer cross-section and for the number A (sites/50 $\mu m^2$) of the thermally decomposable sites in a surface region of the mixed material layer cross-section to be larger than the number B (sites/50 $\mu m^2$) of the thermally decomposable sites in a deep region of the mixed material layer cross-section as previously described.

It should be noted that although thermally decomposable sites having a circumscribed circle diameter of less than 1.0 $\mu m$ (but not less than the limit of detection) and/or thermally decomposable sites having a circumscribed circle diameter of more than 10.0 $\mu m$ may be present in the mixed material layer cross-section, it is preferable that the total number (sites/50 $\mu m^2$) of such sites is smaller than the number of thermally decomposable sites having a circumscribed circle diameter of not less than 1.0 $\mu m$ and not more than 10.0 $\mu m$ (i.e., the total of the number A and the number B). In particular, it is more preferable that the number of thermally decomposable sites having a circumscribed circle diameter of more than 10.0 $\mu m$ is 0.

<<Number A and number B»

The number A of thermally decomposable sites per 50 $\mu m^2$ in the surface region of the mixed material layer cross-section is preferably 3 or more, more preferably 5 or more, even more preferably 10 or more, and particularly preferably 12 or more, and is preferably 50 or less, more preferably 40 or less, even more preferably 30 or less, and particularly preferably 20 or less. When the number A of thermally decomposable sites per 50 $\mu m^2$ in the surface region is within any of the ranges set forth above, it is possible to achieve a good balance of inhibiting heat generation in the event of an internal short circuit of an electrochemical device and reducing IV resistance of the electrochemical device.

The number B of thermally decomposable sites per 50 $\mu m^2$ in the deep region of the mixed material layer cross-section is not specifically limited so long as it is smaller than the number A and may be 0, but is preferably 1 or more, more preferably 3 or more, and even more preferably 7 or more, and is preferably 40 or less, more preferably 30 or less, even more preferably 20 or less, and particularly preferably 10 or less, for example. When the number B of thermally decomposable sites per 50 $\mu m^2$ in the deep region is within any of the ranges set forth above, it is possible to achieve a good balance of inhibiting heat generation in the event of an internal short circuit of an electrochemical device and

reducing IV resistance of the electrochemical device.

A ratio of the number A relative to the number B is preferably 1.1 or more, more preferably 1.3 or more, and even more preferably 1.5 or more, and is preferably 30 or less, more preferably 20 or less, even more preferably 10 or less, and particularly preferably 5 or less. When the ratio of the number A relative to the number B is within any of the ranges set forth above, it is possible to achieve a good balance of inhibiting heat generation in the event of an internal short circuit of an electrochemical device and reducing IV resistance of the electrochemical device.

«Electrode active material»

The electrode active material is a material that gives and receives electrons in an electrode of an electrochemical device. In a case in which the electrochemical device is a lithium ion secondary battery, for example, the electrode active material is normally a material that can occlude and release lithium.

Although the following describes, as one example, a case in which a slurry composition for an electrochemical device electrode is a slurry composition for a lithium ion secondary battery electrode, the presently disclosure is not limited to the following example.

Examples of positive electrode active materials for lithium ion secondary batteries that may be used include known positive electrode active materials such as lithium-containing cobalt oxide (lithium cobalt oxide; $LiCoO_2$), lithium manganate ($LiMn_2O_4$), lithium-containing nickel oxide ($LiNiO_2$), a lithium-containing complex oxide of Co-Ni-Mn ($Li(Co Mn Ni)O_2$), a lithium-containing complex oxide of Ni-Mn-Al, a lithium-containing complex oxide of Ni-Co-Al, olivine-type lithium iron phosphate ($LiFePO_4$), olivine-type lithium manganese phosphate ($LiMnPO_4$), a $Li_2MnO_3$-$LiNiO_2$-based solid solution, a lithium-rich spinel compound represented by $Li_{1+x}Mn_{2-x}O_4$ ($0 < x < 2$), $Li[Ni_{0.17}Li_{0.2}Co_{0.07}Mn_{0.56}]O_2$, and $LiNi_{0.5}Mn_{1.5}O_4$ without any specific limitations.

The amount and particle diameter of the positive electrode active material are not specifically limited and may be the same as those of conventionally used positive electrode active materials.

Examples of negative electrode active materials for lithium ion secondary batteries that may be used include carbon-based negative electrode active materials, metal-based negative electrode active materials, and negative electrode active materials that are combinations thereof.

A carbon-based negative electrode active material can be defined as an active material that contains carbon as its main framework and into which lithium can be inserted (also referred to as "doping"). Examples of carbon-based negative electrode active materials include carbonaceous materials and graphitic materials.

Examples of carbonaceous materials include graphitizing carbon and non-graphitizing carbon, typified by glassy carbon, which has a structure similar to an amorphous structure.

The graphitizing carbon may be a carbon material made using tar pitch obtained from petroleum or coal as a raw material. Specific examples of graphitizing carbon include coke, mesocarbon microbeads (MCMB), mesophase pitch-based carbon fiber, and pyrolytic vapor-grown carbon fiber.

Examples of the non-graphitizing carbon include pyrolyzed phenolic resin, polyacrylonitrile-based carbon fiber, quasi-isotropic carbon, pyrolyzed furfuryl alcohol resin (PFA), and hard carbon.

Examples of graphitic materials include natural graphite and artificial graphite.

Examples of the artificial graphite include artificial graphite obtained by heat-treating carbon containing graphitizing carbon mainly at 2800°C or higher, graphitized MCMB obtained by heat-treating MCMB at 2000°C or higher, and graphitized mesophase pitch-based carbon fiber obtained by heat-treating mesophase pitch-based carbon fiber at 2000°C or higher.

A metal-based negative electrode active material is an active material that contains metal, the structure of which usually contains an element that allows insertion of lithium, and that has a theoretical electric capacity per unit mass of 500 mAh/g or more when lithium is inserted. Examples of metal-based active materials that may be used include lithium metal; a simple substance of metal that can form a lithium alloy (for example, Ag, Al, Ba, Bi, Cu, Ga, Ge, In, Ni, P, Pb, Sb, Si, Sn, Sr, Zn, or Ti); alloys of the simple substance of metal; and oxides, sulfides, nitrides, silicides, carbides, and phosphides of lithium metal, the simple substance of metal, and the alloys of the simple substance of metal. Of these metal-based negative electrode active materials, active materials containing silicon (silicon-based negative electrode active materials) are preferred. One reason for this is that the capacity of a lithium ion secondary battery can be increased through use of a silicon-based negative electrode active material.

Examples of silicon-based negative electrode active materials include silicon (Si), a silicon-containing alloy, SiO, $SiO_x$, and a composite material of conductive carbon and a Si-containing material obtained by coating or combining the Si-containing material with the conductive carbon. Note that one of these silicon-based negative electrode active materials may be used individually, or two or more of these silicon-based negative electrode active materials may be used in combination.

The amount and particle diameter of the negative electrode active material are not specifically limited and may be the same as those of conventionally used negative electrode active materials.

<<Binder>>

Any polymer can be used as the binder without any specific limitations so long as it is a polymer that can display binding capacity inside of an electrochemical device. Suitable examples of polymers that may be used as the binder from a viewpoint of increasing peel strength of the electrode and further reducing IV resistance of an electrochemical device include a polymer including mainly aliphatic conjugated diene monomer units or a hydrogenated product thereof (i.e., a diene polymer), a polymer including mainly (meth)acrylic acid ester monomer units (i.e., an acrylic polymer), a polymer including mainly (meth)acrylonitrile (i.e., a nitrile polymer), and a polymer including mainly fluorine-containing monomer units (i.e., a fluoropolymer). Of these polymers, a diene polymer, an acrylic polymer, and a nitrile polymer are more preferable, and a diene polymer is even more preferable.
Note that one type of binder may be used individually, or two or more types of binders may be used in combination in a freely selected ratio.
In the present disclosure, "(meth)acryl" indicates "acryl" and/or "methacryl", and "(meth)acrylo" indicates "acrylo" and/or "methacrylo".
Moreover, when a polymer is said to "include a monomer unit" in the present disclosure, this means that "a polymer obtained using that monomer includes a repeating unit derived from the monomer".
Furthermore, when a polymer is said to "include mainly" a certain monomer unit in the present disclosure, this means that "the proportional content of that monomer unit is more than 50 mass% when the amount of all repeating units included in the polymer is taken to be 100 mass%".
The proportional content of each type of monomer unit in a polymer referred to in the present disclosure can be measured by a nuclear magnetic resonance (NMR) method such as $^1$H-NMR.

[Prescribed functional group]

The binder is preferably a polymer that includes a functional group. The functional group included in the binder may be a carboxy group, a hydroxyl group, a nitrile group, an amino group, an epoxy group, an oxazoline group, a sulfo group, an ester group, or an amide group (hereinafter, these functional groups are also referred to collectively as "prescribed functional groups"). The polymer serving as the binder may include one type of prescribed functional group described above or may include two or more types of prescribed functional groups described above.
When a polymer that includes any of these prescribed functional groups is used as the binder, peel strength of the electrode can be increased, and IV resistance of an electrochemical device can be further reduced. Moreover, from a viewpoint of further increasing peel strength of the electrode while also even further reducing IV resistance of an electrochemical device, the polymer serving as the binder preferably includes one or more selected from the group consisting of a carboxy group, a hydroxyl group, and a nitrile group, more preferably includes either or both of a carboxy group and a nitrile group, and even more preferably includes both a carboxy group and a nitrile group.
No specific limitations are placed on the method by which any of the prescribed functional groups described above is introduced into the polymer. For example, although a polymer may be produced using a monomer that includes any of the prescribed functional groups described above (prescribed functional group-containing monomer) so as to obtain a polymer that includes a prescribed functional group-containing monomer unit or any polymer may be modified so as to obtain a polymer into which any of the prescribed functional groups described above has been introduced, the former of these methods is preferable. In other words, the polymer serving as the binder preferably includes at least any one of a carboxy group-containing monomer unit, a hydroxyl group-containing monomer unit, a nitrile group-containing monomer unit, an amino group-containing monomer unit, an epoxy group-containing monomer unit, an oxazoline group-containing monomer unit, a sulfo group-containing monomer unit, an ester group-containing monomer unit, and an amide group-containing monomer unit, more preferably includes at least any one of a carboxy group-containing monomer unit, a hydroxyl group-containing monomer unit, and a nitrile group-containing monomer unit, even more preferably includes either or both of a carboxy group-containing monomer unit and a nitrile group-containing monomer unit, and particularly preferably includes both a carboxy group-containing monomer unit and a nitrile group-containing monomer unit.

[Carboxy group-containing monomer unit]

Examples of carboxy group-containing monomers that can form a carboxy group-containing monomer unit include monocarboxylic acids, derivatives of monocarboxylic acids, dicarboxylic acids, acid anhydrides of dicarboxylic acids, and derivatives of dicarboxylic acids and acid anhydrides thereof.
Examples of monocarboxylic acids include acrylic acid, methacrylic acid, and crotonic acid.
Examples of derivatives of monocarboxylic acids include 2-ethylacrylic acid, isocrotonic acid, $\alpha$-acetoxyacrylic acid, $\beta$-trans-aryloxyacrylic acid, and $\alpha$-chloro-$\beta$-E-methoxyacrylic acid.
Examples of dicarboxylic acids include maleic acid, fumaric acid, and itaconic acid.

Examples of derivatives of dicarboxylic acids include methylmaleic acid, dimethylmaleic acid, phenylmaleic acid, chloromaleic acid, dichloromaleic acid, fluoromaleic acid, and maleic acid monoesters such as nonyl maleate, decyl maleate, dodecyl maleate, octadecyl maleate, and fluoroalkyl maleates.
Examples of acid anhydrides of dicarboxylic acids include maleic anhydride, acrylic anhydride, methylmaleic anhydride, and dimethylmaleic anhydride.
An acid anhydride that produces a carboxy group through hydrolysis can also be used as a carboxy group-containing monomer. Of these examples, acrylic acid and methacrylic acid are preferable as carboxy group-containing monomers. Note that one carboxy group-containing monomer may be used individually, or two or more carboxy group-containing monomers may be used in combination in a freely selected ratio.

[Hydroxyl group-containing monomer unit]

Examples of hydroxyl group-containing monomers that can form a hydroxyl group-containing monomer unit include ethylenically unsaturated alcohols such as (meth)allyl alcohol, 3-buten-1-ol, and 5-hexen-1-ol; alkanol esters of ethylenically unsaturated carboxylic acids such as 2-hydroxyethyl acrylate, 2-hydroxypropyl acrylate, 2-hydroxyethyl methacrylate, 2-hydroxypropyl methacrylate, di-2-hydroxyethyl maleate, di-4-hydroxybutyl maleate, and di-2-hydroxypropyl itaconate; esters of (meth)acrylic acid and polyalkylene glycol represented by a general formula $CH_2=CR^a-COO-(C_qH_{2q}O)_p-H$ (where p represents an integer of 2 to 9, q represents an integer of 2 to 4, and $R^a$ represents a hydrogen atom or a methyl group); mono(meth)acrylic acid esters of dihydroxy esters of dicarboxylic acids such as 2-hydroxyethyl-2'-(meth)acryloyloxy phthalate and 2-hydroxyethyl-2'-(meth)acryloyloxy succinate; vinyl ethers such as 2-hydroxyethyl vinyl ether and 2-hydroxypropyl vinyl ether; mono(meth)allyl ethers of alkylene glycols such as (meth)allyl-2-hydroxyethyl ether, (meth)allyl-2-hydroxypropyl ether, (meth)allyl-3-hydroxypropyl ether, (meth)allyl-2-hydroxybutyl ether, (meth)allyl-3-hydroxybutyl ether, (meth)allyl-4-hydroxybutyl ether, and (meth)allyl-6-hydroxyhexyl ether; polyoxyalkylene glycol mono(meth)allyl ethers such as diethylene glycol mono(meth)allyl ether and dipropylene glycol mono(meth)allyl ether; mono(meth)allyl ethers of halogen or hydroxy substituted (poly)alkylene glycols such as glycerin mono(meth)allyl ether, (meth)allyl-2-chloro-3-hydroxypropyl ether, and (meth)allyl-2-hydroxy-3-chloropropyl ether; mono(meth)allyl ethers of polyhydric phenols such as eugenol and isoeugenol, and halogen substituted products thereof; (meth)allyl thioethers of alkylene glycols such as (meth)allyl-2-hydroxyethyl thioether and (meth)allyl-2-hydroxypropyl thioether; and hydroxyl group-containing amides such as N-hydroxymethylacrylamide (N-methylolacrylamide), N-hydroxymethylmethacrylamide, N-hydroxyethylacrylamide, and N-hydroxyethylmethacrylamide. Note that one hydroxyl group-containing monomer may be used individually, or two or more hydroxyl group-containing monomers may be used in combination in a freely selected ratio.
In the present disclosure, "(meth)allyl" indicates "allyl" and/or "methallyl", and "(meth)acryloyl" indicates "acryloyl" and/or "methacryloyl".

[Nitrile group-containing monomer unit]

Examples of nitrile group-containing monomers that can form a nitrile group-containing monomer unit include $\alpha,\beta$-ethylenically unsaturated nitrile monomers. Specifically, any $\alpha,\beta$-ethylenically unsaturated compound that includes a nitrile group can be used as an $\alpha,\beta$-ethylenically unsaturated nitrile monomer without any specific limitations. Examples include acrylonitrile; $\alpha$-halogenoacrylonitriles such as $\alpha$-chloroacrylonitrile and $\alpha$-bromoacrylonitrile; and $\alpha$-alkylacrylonitriles such as methacrylonitrile and $\alpha$-ethylacrylonitrile. Note that one nitrile group-containing monomer may be used individually, or two or more nitrile group-containing monomers may be used in combination in a freely selected ratio.

[Amino group-containing monomer unit]

Examples of amino group-containing monomers that can form an amino group-containing monomer unit include dimethylaminoethyl (meth)acrylate, diethylaminoethyl (meth)acrylate, aminoethyl vinyl ether, and dimethylaminoethyl vinyl ether. Note that one amino group-containing monomer may be used individually, or two or more amino group-containing monomers may be used in combination in a freely selected ratio.
In the present disclosure, "(meth)acrylate" indicates "acrylate" and/or "methacrylate".

[Epoxy group-containing monomer unit]

Examples of epoxy group-containing monomers that can form an epoxy group-containing monomer unit include monomers that include a carbon-carbon double bond and an epoxy group.
Examples of monomers that include a carbon-carbon double bond and an epoxy group include unsaturated glycidyl ethers such as vinyl glycidyl ether, allyl glycidyl ether, butenyl glycidyl ether, and o-allylphenyl glycidyl ether;

monoepoxides of dienes and polyenes such as butadiene monoepoxide, chloroprene monoepoxide, 4,5-epoxy-2-pentene, 3,4-epoxy-1-vinylcyclohexene, and 1,2-epoxy-5,9-cyclododecadiene; alkenyl epoxides such as 3,4-epoxy-1-butene, 1,2-epoxy-5-hexene, and 1,2-epoxy-9-decene; and glycidyl esters of unsaturated carboxylic acids such as glycidyl acrylate, glycidyl methacrylate, glycidyl crotonate, glycidyl-4-heptenoate, glycidyl sorbate, glycidyl linoleate, glycidyl-4-methyl-3-pentenoate, glycidyl ester of 3-cyclohexenecarboxylic acid, and glycidyl ester of 4-methyl-3-cyclohexenecarboxylic acid. Note that one epoxy group-containing monomer may be used individually, or two or more epoxy group-containing monomers may be used in combination in a freely selected ratio.

[Oxazoline group-containing monomer unit]

Examples of oxazoline group-containing monomers that can form an oxazoline group-containing monomer unit include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-methyl-2-oxazoline, and 2-isopropenyl-5-ethyl-2-oxazoline. Note that one oxazoline group-containing monomer may be used individually, or two or more oxazoline group-containing monomers may be used in combination in a freely selected ratio.

[Sulfo group-containing monomer unit]

Examples of sulfo group-containing monomers that can form a sulfo group-containing monomer unit include vinyl sulfonic acid, methyl vinyl sulfonic acid, (meth)allyl sulfonic acid, styrene sulfonic acid, (meth)acrylic acid 2-sulfoethyl, 2-acrylamido-2-methylpropane sulfonic acid, and 3-allyloxy-2-hydroxypropane sulfonic acid. Note that one sulfo group-containing monomer may be used individually, or two or more sulfo group-containing monomers may be used in combination in a freely selected ratio.

[Ester group-containing monomer unit]

Examples of ester group-containing monomers that can form an ester group-containing monomer unit include (meth)acrylic acid ester monomers. Examples of (meth)acrylic acid ester monomers include acrylic acid alkyl esters such as methyl acrylate, ethyl acrylate, n-propyl acrylate, isopropyl acrylate, butyl acrylate (n-butyl acrylate, t-butyl acrylate, etc.), pentyl acrylate, hexyl acrylate, heptyl acrylate, octyl acrylate (2-ethylhexyl acrylate, etc.), nonyl acrylate, decyl acrylate, lauryl acrylate, n-tetradecyl acrylate, and stearyl acrylate; and methacrylic acid alkyl esters such as methyl methacrylate, ethyl methacrylate, n-propyl methacrylate, isopropyl methacrylate, butyl methacrylate (n-butyl methacrylate, t-butyl methacrylate, etc.), pentyl methacrylate, hexyl methacrylate, heptyl methacrylate, octyl methacrylate (2-ethylhexyl methacrylate, etc.), nonyl methacrylate, decyl methacrylate, lauryl methacrylate, n-tetradecyl methacrylate, and stearyl methacrylate. Note that one ester group-containing monomer may be used individually, or two or more ester group-containing monomers may be used in combination in a freely selected ratio.

Also note that in a case in which a certain monomer includes a prescribed functional group other than an ester group, that monomer is considered to not be included among ester group-containing monomers in the present disclosure.

[Amide group-containing monomer unit]

Examples of amide group-containing monomers that can form an amide group-containing monomer unit include acrylamide, methacrylamide, and vinylpyrrolidone. Note that one amide group-containing monomer may be used individually, or two or more amide group-containing monomers may be used in combination in a freely selected ratio.

When the amount of all repeating units included in the polymer serving as the binder is taken to be 100 mass%, the proportional content of prescribed functional group-containing monomer units in the polymer is preferably 10 mass% or more, more preferably 20 mass% or more, and even more preferably 30 mass% or more from a viewpoint of increasing peel strength of the electrode and further reducing IV resistance of an electrochemical device. The upper limit for the proportional content of prescribed functional group-containing monomer units in the polymer serving as the binder is not specifically limited, but is 100 mass% or less, and can be set as 99 mass% or less, for example.

[Other repeating units]

The polymer serving as the binder may include repeating units other than the prescribed functional group-containing monomer units described above (i.e., may include other repeating units). Although no specific limitations are placed on such other repeating units, one example thereof is an aliphatic conjugated diene monomer unit in a case in which the polymer is a diene polymer.

Examples of aliphatic conjugated diene monomers that can form an aliphatic conjugated diene monomer unit

include 1,3-butadiene, isoprene, 2,3-dimethyl-1,3-butadiene, and 1,3-pentadiene. One of these aliphatic conjugated diene monomers may be used individually, or two or more of these aliphatic conjugated diene monomers may be used in combination in a freely selected ratio.

Note that the term "aliphatic conjugated diene monomer unit" as used in the present disclosure is inclusive of a structural unit (hydrogenated unit) obtained through hydrogenation of a monomer unit included in a polymer that is obtained using an aliphatic conjugated diene monomer.

Of the aliphatic conjugated diene monomers described above, 1,3-butadiene and isoprene are preferable. In other words, a 1,3-butadiene unit, an isoprene unit, a hydrogenated 1,3-butadiene unit, or a hydrogenated isoprene unit is preferable as an aliphatic conjugated diene monomer unit, and a hydrogenated 1,3-butadiene unit or a hydrogenated isoprene unit is more preferable as an aliphatic conjugated diene monomer unit.

In a case in which the polymer serving as the binder includes an aliphatic conjugated diene monomer unit, from a viewpoint of increasing peel strength of the electrode and further reducing IV resistance of an electrochemical device, the proportional content of diene monomer units in the polymer when the amount of all repeating units included in the polymer is taken to be 100 mass% is preferably more than 50 mass%, and more preferably 60 mass% or more, and is preferably 90 mass% or less, preferably 80 mass% or less, and even more preferably 70 mass% or less.

[Production method of binder]

No specific limitations are placed on the method by which the binder is produced. For example, the binder, which is a polymer, may be produced by polymerizing a monomer composition containing one monomer or two or more monomers in an aqueous solvent and then optionally performing hydrogenation and/or modification. Note that the proportional content of each monomer in the monomer composition can be determined based on the desired proportional content of each monomer unit in the polymer.

The polymerization method is not specifically limited and may, for example, be any of solution polymerization, suspension polymerization, bulk polymerization, and emulsion polymerization. Also, the polymerization reaction can be any of ionic polymerization, radical polymerization, living radical polymerization, various types of condensation polymerization, addition polymerization, and so forth. A known emulsifier and/or polymerization initiator may be used in the polymerization as necessary. Moreover, the hydrogenation and modification can be performed by known methods.

[Content of binder]

The amount of the binder that is contained in the electrode mixed material layer is preferably 0.3 parts by mass or more, and more preferably 0.7 parts by mass or more per 100 parts by mass of the electrode active material, and is preferably 5 parts by mass or less, more preferably 4 parts by mass or less, and even more preferably 3 parts by mass or less per 100 parts by mass of the electrode active material. When the content of the binder is 0.3 parts by mass or more per 100 parts by mass of the electrode active material, peel strength of the electrode can be improved. On the other hand, when the content of the binder is 5 parts by mass or less per 100 parts by mass of the electrode active material, the proportion constituted by the electrode active material in the electrode mixed material layer can be ensured, and the capacity of an electrochemical device can be sufficiently increased.

<<Foaming agent>>

The foaming agent that is contained in the electrode mixed material layer and forms thermally decomposable sites in a mixed material layer cross-section is not specifically limited so long as it is a compound having a specific thermal decomposition temperature. However, from a viewpoint of further inhibiting heat generation in the event of an internal short circuit of an electrochemical device and further reducing IV resistance of the electrochemical device, nitrogenous foaming agents are preferable, compounds including one or more selected from the group consisting of an amino group, an azo group, a hydrazino group, a hydrazo group, and a nitroso group, derivatives of these compounds, and salts of these compounds and derivatives thereof are more preferable, compounds including either or both of an amino group and an azo group, derivatives of these compounds, and salts of these compounds and derivatives thereof are even more preferable, and melamine compounds are particularly preferable.

Note that one foaming agent may be used individually, or two or more foaming agents may be used in combination in a freely selected ratio.

[Melamine compound]

Examples of melamine compounds that may be used include melamine, derivatives of melamine, and salts of melamine and derivatives thereof. The melamine or derivative of melamine may, for example, be a compound represented

by the following formula (I).

[Chem. 1]

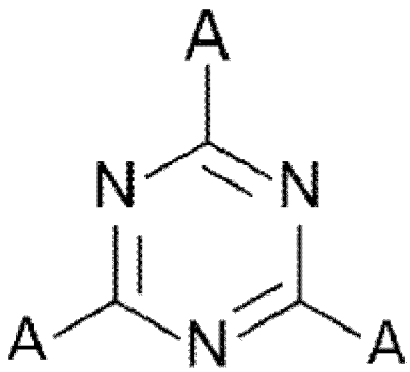

(I)

In formula (I), each A represents, independently of one another, a hydroxyl group or $NR^1R^2$ ($R^1$ and $R^2$ each represent, independently of each other, a hydrogen atom, a hydrocarbon group, or a hydroxyl group-containing hydrocarbon group; when more than one $R^1$ is present in formula (I), each $R^1$ may be the same or different; and when more than one $R^2$ is present in formula (I), each $R^2$ may be the same or different).

Note that when the hydrocarbon group and the hydroxyl group-containing hydrocarbon group of $R^1$ and $R^2$ include two or more carbon atoms, these groups may have one or more oxygen atoms (-O-) interposed between carbon atoms (however, when two or more oxygen atoms are interposed, these oxygen atoms are not adjacent to one another). The number of carbon atoms in the hydrocarbon group and the hydroxyl group-containing hydrocarbon group of $R^1$ and $R^2$ is not specifically limited but is preferably not less than 1 and not more than 5.

Moreover, examples of salts of melamine and derivatives of melamine include, but are not specifically limited to, sulfates and cyanurates.

From a viewpoint of improving peel strength of the electrode while also further reducing IV resistance of an electrochemical device, the melamine compound is preferably melamine, ammeline, ammelide, or a salt of any thereof with cyanuric acid, is more preferably melamine or a cyanuric acid salt of melamine (melamine cyanurate), and is even more preferably melamine cyanurate.

Note that one melamine compound may be used individually, or two or more melamine compounds may be used in combination in a freely selected ratio.

[Other foaming agents]

Examples of foaming agents other than the above-described melamine compounds that may be used include azobisisobutyronitrile, p-toluenesulfonyl hydrazide, 5-methyl-1H-benzotriazole, oxybis(benzenesulfonyl hydrazide), trihydrazine triazine, azodicarbonamide, hydrazodicarbonamide, dinitrosopentamethylenetetramine, p-toluenesulfonyl semicarbazide, p,p'-oxybis(benzenesulfonyl semicarbazide), and sodium hydrogen carbonate. Note that one other foaming agent may be used individually, or two or more other foaming agents may be used in combination in a freely selected ratio.

[Thermal decomposition temperature]

The thermal decomposition temperature of the foaming agent is required to be not lower than 150°C and not higher than 400°C, is preferably 200°C or higher, and more preferably 300°C or higher, and is preferably 380°C or lower, more preferably 360°C or lower, and even more preferably 350°C or lower. When the thermal decomposition temperature of the foaming agent is lower than 150°C, there are instances in which the foaming agent unexpectedly decomposes during normal operation of an electrochemical device or during storage, and IV resistance of an electrochemical device increases. On the other hand, when the thermal decomposition temperature of the foaming agent is higher than 400°C, it becomes harder to cause the foaming agent to release incombustible gas at an appropriate timing, and an effect of inhibiting heat generation in the event of an internal short circuit that is expected through use of the foaming agent cannot be sufficiently achieved.

[Content of foaming agent]

The amount of the foaming agent that is contained in the electrode mixed material layer is preferably 0.3 parts by mass or more, and more preferably 0.7 parts by mass or more per 100 parts by mass of the electrode active material, and is preferably 5 parts by mass or less, more preferably 4 parts by mass or less, and even more preferably 3 parts by mass or less per 100 parts by mass of the electrode active material. When the content of the foaming agent is 0.3 parts by mass or more per 100 parts by mass of the electrode active material, peel strength of the electrode can be increased while also further inhibiting heat generation in the event of an internal short circuit of an electrochemical device. On the other hand, when the content of the foaming agent is 5 parts by mass or less per 100 parts by mass of the electrode active material, IV resistance of an electrochemical device can be further reduced.

<<Surfactant>>

The electrode mixed material layer may contain a surfactant. No specific limitations are placed on the disposition of the surfactant in the electrode mixed material layer. For example, when a mixed material layer cross-section is checked, the surfactant may form a covering site that covers at least part of the perimeter of a thermally decomposable site. Such a covering site can be formed by, for example, using a thermally decomposable material having a core-shell structure such as described further below in formation of the electrode mixed material layer.

[Type]

Examples of surfactants that can be used include anionic surfactants, non-ionic surfactants, and cationic surfactants.

The anionic surfactant may, for example, be an aliphatic carboxylic acid (salt) such as lauric acid, myristic acid, palmitic acid, stearic acid, arachidic acid, or a metal salt thereof (sodium salt, lithium salt, potassium salt, calcium salt, magnesium salt, aluminum salt, or zinc salt); an alkyl sulfate salt such as sodium 2-ethylhexyl sulfate or sodium lauryl sulfate; a dialkyl sulfosuccinate salt such as sodium bis(2-ethylhexyl) sulfosuccinate; or an alkyl benzene sulfonic acid salt.

The non-ionic surfactant may, for example, be an ether-type non-ionic surfactant such as polyoxyethylene lauryl ether, polyoxyethylene stearyl ether, or polyoxyethylene 2-ethylhexyl ether; or an ester-type non-ionic surfactant such as polyoxyethylene monolaurate, polyoxyethylene monostearate, sorbitan monostearate, sorbitan monolaurate, sorbitan trioleate, or glyceryl stearate.

The cationic surfactant may, for example, be an amine salt-type cationic surfactant such as tetradecylamine acetate or octadecylamine acetate; or a trimethyl-type cationic surfactant such as dodecyltrimethylammonium chloride or octadecyltrimethylammonium chloride.

One surfactant may be used individually, or two or more surfactants may be used in combination in a freely selected ratio. From a viewpoint of increasing peel strength of the electrode and further reducing IV resistance of an electrochemical device, the surfactant is preferably an anionic surfactant, more preferably an aliphatic carboxylic acid (salt), even more preferably sodium stearate or lithium stearate, and particularly preferably sodium stearate.

Note that in the present disclosure, "aliphatic carboxylic acid (salt)" indicates "aliphatic carboxylic acid" and/or "aliphatic carboxylic acid salt".

[Molecular weight]

The molecular weight of the surfactant is preferably 50 g/mol or more, more preferably 100 g/mol or more, and even more preferably 250 g/mol or more, and is preferably 1,000 g/mol or less, more preferably 800 g/mol or less, and even more preferably 500 g/mol or less. When the molecular weight of the surfactant is not less than 50 g/mol and not more than 1,000 g/mol, IV resistance of an electrochemical device can be further reduced.

[Melting point]

In addition, the melting point of the surfactant is preferably 50°C or higher, more preferably 200°C or higher, and even more preferably 250°C or higher, and is preferably 350°C or lower, more preferably 330°C or lower, and even more preferably 320°C or lower. When the melting point of the surfactant is 50°C or higher, IV resistance of an electrochemical device can be further reduced. On the other hand, when the melting point of the surfactant is 350°C or lower, heat generation in the event of an internal short circuit of an electrochemical device can be further inhibited.

[Content of surfactant]

The amount of the surfactant that is contained in the electrode mixed material layer when the total amount of the foaming agent and the surfactant is taken to be 100 mass% is preferably 0.01 mass% or more, more preferably 0.1 mass% or more, and even more preferably 1 mass% or more, and is preferably 10 mass% or less, more preferably 5 mass% or less, and even more preferably 4 mass% or less. When the proportion constituted by the surfactant among the total of the foaming agent and the surfactant is 0.01 mass% or more, IV resistance of an electrochemical device can be further reduced. On the other hand, when the proportion constituted by the surfactant among the total of the foaming agent and the surfactant is 10 mass% or less, peel strength of the electrode can be increased while also further inhibiting heat generation in the event of an internal short circuit of an electrochemical device.
Note that the "proportion constituted by the surfactant among the total amount of the foaming agent and the surfactant" that is referred to in the present disclosure can be measured by thermogravimetric analysis, thermal decomposition GC-MS, or the like.

<<Other components>>

Besides the components described above, the electrode mixed material layer may contain known components such as conductive materials, crosslinkers, reinforcing materials, antioxidants, dispersants, rheology modifiers, and additives for electrolyte solution having a function of inhibiting decomposition of electrolyte solution.
Examples of conductive materials that can be used include, but are not specifically limited to, conductive carbon materials such as carbon black (for example, acetylene black, Ketjenblack® (Ketjenblack is a registered trademark in Japan, other countries, or both), furnace black, etc.), single-walled or multi-walled carbon nanotubes (multi-walled carbon nanotubes are inclusive of cup-stacked carbon nanotubes), carbon nanohorns, vapor-grown carbon fiber, milled carbon fiber obtained through pyrolysis and subsequent pulverization of polymer fiber, single-layer or multi-layer graphene, and carbon non-woven fabric sheet obtained through pyrolysis of non-woven fabric formed of polymer fiber; and fibers, foils, etc. of various metals.
One other component may be used individually, or two or more other components may be used in combination in a freely selected ratio.

<<Thickness>>

The thickness of the electrode mixed material layer is not specifically limited but is preferably 20 μm or more, and more preferably 40 μm or more, and is preferably 200 μm or less, and more preferably 150 μm or less, for example.
Note that in a case in which the presently disclosed electrode includes electrode mixed material layers at both sides of the current collector, the "thickness of the electrode mixed material layer" refers to the thickness of each electrode mixed material layer formed at each side (one side) of the current collector.

<Current collector>

The current collector included in the electrode for an electrochemical device is not specifically limited so long as it is a material having electrical conductivity and electrochemical durability, and may be selected in accordance with the type of electrochemical device. In a case in which the electrode for an electrochemical device is an electrode for a lithium ion secondary battery, the material forming the current collector may be iron, copper, aluminum, nickel, stainless steel, titanium, tantalum, gold, platinum, or the like. Of these materials, copper foil is particularly preferable as a current collector used for a negative electrode. On the other hand, aluminum foil is particularly preferable as a material forming a current collector used for a positive electrode.
Note that one of these materials may be used individually, or two or more of these materials may be used in combination in a freely selected ratio.
The thickness of the current collector is not specifically limited but is preferably 5 μm or more, and more preferably 10 μm or more, and is preferably 100 μm or less, and more preferably 50 μm or less, for example.

<Production method of electrode for electrochemical device>

No specific limitations are placed on the method by which the presently disclosed electrode is produced so long as the above-described electrode mixed material layer that has a large number of thermally decomposable sites of a specific size in a surface region can be formed on the current collector.
In production of the presently disclosed electrode, it is preferable that the electrode mixed material layer is formed through drying of a slurry composition for an electrochemical device electrode described below. In other words,

the electrode mixed material layer is preferably a dried product of the slurry composition for an electrochemical device electrode.

«Slurry composition for electrochemical device electrode»

The slurry composition used to form the electrode mixed material layer is a composition having the above-described electrode active material, the above-described binder, the above-described thermally decomposable material that includes a foaming agent and optionally includes a surfactant, and the above-described other components that are optionally used dissolved and/or dispersed in a solvent.
Note that components contained in the electrode mixed material layer formed using the slurry composition are components that were contained in the slurry composition, and the preferred ratio of these components in the slurry composition is the same as the preferred ratio thereof in the electrode mixed material layer described above.

[Solvent]

The solvent that is contained in the slurry composition may be water or an organic solvent, and is preferably an organic solvent. Examples of organic solvents that can be used include acetonitrile, N-methylpyrrolidone, acetylpyridine, cyclopentanone, N,N-dimethylacetamide, dimethylformamide, dimethyl sulfoxide, methylformamide, methyl ethyl ketone, furfural, and ethylenediamine. Of these organic solvents, N-methyl-2-pyrrolidone (NMP) is particularly preferable from viewpoints of ease of handling, safety, ease of synthesis, and so forth.
Note that one solvent may be used individually, or two or more solvents may be used in combination in a freely selected ratio.

[Thermally decomposable material including foaming agent]

The thermally decomposable material that is used to produce the slurry composition is a material that includes at least a foaming agent, may be a material that is substantially composed of just a foaming agent, or may be a material having a core-shell structure including a core formed of a foaming agent and a shell formed of a surfactant that at least partially covers an outer surface of the core such as described further below.

-Particle properties-

The thermally decomposable material preferably has specific particle properties in order to form an electrode mixed material layer that has the specific properties described above.
More specifically, the thermally decomposable material preferably has one or more properties selected from the group consisting of a number-average particle diameter of not less than 0.01 μm and not more than 10 μm, a volume-average particle diameter of not less than 0.01 μm and not more than 10 μm, a ratio of number-average particle diameter relative to volume-average particle diameter (hereinafter, also referred to simply as a "particle diameter ratio") of not less than 0.05 and not more than 1, and a circularity of not less than 0.05 and not more than 0.95, and more preferably has all of the properties in this group.
As a result of the thermally decomposable material having the particle properties set forth above, it is possible to sufficiently ensure an effect of inhibiting heat generation in the event of an internal short circuit that is due to the foaming agent included in the thermally decomposable material while also causing good display of an effect of reducing IV resistance. This is presumed to be because it is possible to control the behavior of the thermally decomposable material during application and drying in formation of the electrode mixed material layer from the slurry composition that contains a binder composition, because the thermally decomposable material (particularly a comparatively small thermally decomposable material) can be inhibited from excessively covering the electrode active material in the obtained electrode mixed material layer, and because disposition of the thermally decomposable material in the surface region is facilitated through these particle properties.
The "number-average particle diameter" of the thermally decomposable material referred to in the present disclosure is the particle diameter corresponding to a cumulative value of 50% in a particle size distribution (by number) measured using a laser diffraction particle size distribution analyzer.
The "volume-average particle diameter" of the thermally decomposable material referred to in the present disclosure is the particle diameter corresponding to a cumulative value of 50% in a particle size distribution (by volume) measured using a laser diffraction particle size distribution analyzer.
The "circularity" of the thermally decomposable material referred to in the present disclosure is calculated by a formula: circularity = $4\pi S/L^2$, where S is the area of a two-dimensional image of the thermally decomposable material and L is the perimeter length thereof. Note that the circularity takes a value of more than 0 and not more than 1 and that

the circularity of a perfect circle is 1. The value of the circularity decreases with increasing complexity of the two-dimensional image.

The number-average particle diameter of the thermally decomposable material is preferably 0.01 μm or more, more preferably 0.05 μm or more, and even more preferably 0.3 μm or more, and is preferably 10 μm or less, more preferably 5 μm or less, and even more preferably 4 μm or less. When the number-average particle diameter of the thermally decomposable material is 0.01 μm or more, heat generation in the event of an internal short circuit of an electrochemical device can be further inhibited, and IV resistance of the electrochemical device can be further reduced. On the other hand, when the number-average particle diameter of the thermally decomposable material is 10 μm or less, IV resistance of an electrochemical device can be further reduced.

The volume-average particle diameter of the thermally decomposable material is preferably 0.01 μm or more, more preferably 0.1 μm or more, and even more preferably 1 μm or more, and is preferably 10 μm or less, more preferably 8 μm or less, and even more preferably 5 μm or less. When the volume-average particle diameter of the thermally decomposable material is 0.01 μm or more, IV resistance of an electrochemical device can be further reduced. On the other hand, when the volume-average particle diameter of the thermally decomposable material is 10 μm or less, heat generation in the event of an internal short circuit of an electrochemical device can be further inhibited, and IV resistance of the electrochemical device can be further reduced.

A ratio of number-average particle diameter relative to volume-average particle diameter for the thermally decomposable material is preferably 0.05 or more, more preferably 0.2 or more, and even more preferably 0.3 or more, and is 1 or less, preferably 0.95 or less, and more preferably 0.8 or less. When the particle diameter ratio of the thermally decomposable material is 0.05 or more, IV resistance of an electrochemical device can be further reduced. On the other hand, when the particle diameter ratio of the thermally decomposable material is 0.95 or less, an effect of inhibiting heat generation in the event of an internal short circuit that is expected through use of the thermally decomposable material can be more sufficiently achieved.

The circularity of the thermally decomposable material is preferably 0.05 or more, more preferably 0.5 or more, even more preferably 0.6 or more, and particularly preferably 0.75 or more, and is preferably 0.95 or less, more preferably 0.9 or less, and even more preferably 0.85 or less. When the circularity of the thermally decomposable material is 0.05 or more, peel strength of the electrode can be increased, and IV resistance of an electrochemical device can be further reduced. On the other hand, when the circularity of the thermally decomposable material is 0.95 or less, IV resistance of an electrochemical device can be further reduced.

Note that the particle properties of the thermally decomposable material described above can be controlled by altering the production conditions of the thermally decomposable material.

For example, in production of a thermally decomposable material that includes melamine cyanurate as a foaming agent, the number-average particle diameter and the volume-average particle diameter can be controlled by altering the solid content concentration in a reaction for obtaining melamine cyanurate from melamine and cyanuric acid or by performing pulverization with respect to the obtained melamine cyanurate using a bead mill or the like. Moreover, in production of a thermally decomposable material that includes melamine cyanurate as a foaming agent, for example, the circularity can be controlled by altering the pH in a reaction for obtaining melamine cyanurate from melamine and cyanuric acid.

Furthermore, particle properties of the thermally decomposable material can also be controlled by altering granulation conditions in production of the thermally decomposable material.

-Core-shell structure-

The thermally decomposable material may have a core-shell structure including a core formed of the foaming agent and a shell formed of the surfactant that at least partially covers an outer surface of the core. By using a thermally decomposable material having a core-shell structure in which a foaming agent is covered by a surfactant, it is possible to further reduce IV resistance of an electrochemical device.

Although it is not clear why IV resistance of an electrochemical device can be further reduced through the thermally decomposable material having the above-described core-shell structure, the reason for this is presumed to be that the thermally decomposable material having a structure in which the foaming agent is covered by the surfactant does not excessively adsorb to the electrode active material, and, as a result, electrical contact among the electrode active material can be sufficiently ensured.

-Production method of thermally decomposable material-

A thermally decomposable material having the particle properties described above can be produced, for example, through granulation of a composition (hereinafter, referred to as a "composition for a thermally decomposable material") that contains at least a foaming agent and that optionally contains a surfactant and a dispersion medium.

Note that a dispersion medium can be used as appropriate depending on the method of granulation, etc. and that the type of dispersion medium can also be selected as appropriate from water and known organic solvents depending on the method of granulation.

No specific limitations are placed on the method of granulation by which a thermally decomposable material is obtained from the composition for a thermally decomposable material described above so long as it is possible to obtain a thermally decomposable material having specific particle properties. Examples of methods that may be used include spray granulation, fluidized bed granulation, coagulant precipitation, pH precipitation, dry mixing, and drying and granulation performed after wet mixing. Of these methods, spray granulation is preferable.

In spray granulation, a slurry composition (hereinafter, referred to as a "slurry composition for a thermally decomposable material") that contains a foaming agent and a dispersion medium and that optionally contains a surfactant can be spray dried as a composition for a thermally decomposable material so as to obtain a thermally decomposable material having specific particle properties.

The method by which the slurry composition for a thermally decomposable material is produced is not specifically limited and can be by performing mixing of the above-described components using a known mixer. Examples of known mixers that may be used include a ball mill, a sand mill, a bead mill, a pigment disperser, a grinding machine, an ultrasonic disperser, a homogenizer, and a planetary mixer. The mixing is normally performed in a range of from room temperature to 80°C for from 10 minutes to several hours.

The slurry composition for a thermally decomposable material obtained by this mixing is sprayed using a spray dryer so as to dry droplets of the sprayed slurry composition for a thermally decomposable material inside a drying tower. This makes it possible to obtain a thermally decomposable material having a particulate form. Note that in a case in which the slurry composition for a thermally decomposable material contains a surfactant, a thermally decomposable material in which the outer surface of the foaming agent is at least partially covered by the surfactant can be obtained through the surfactant physically and/or chemically bonding to the outer surface of the foaming agent contained in the droplets. The temperature of the sprayed slurry composition for a thermally decomposable material is normally room temperature, but the slurry composition for a thermally decomposable material may be heated to a higher temperature than room temperature. Moreover, the hot air temperature during spray drying is preferably lower than the thermal decomposition temperature of the thermally decomposable material. For example, the hot air temperature may be not lower than 80°C and not higher than 250°C, and is preferably not lower than 100°C and not higher than 200°C.

[Production method of slurry composition]

The slurry composition set forth above can be produced by mixing the above-described components. Specifically, the slurry composition can be produced by mixing the above-described components using a mixer such as a ball mill, a sand mill, a bead mill, a pigment disperser, a grinding machine, an ultrasonic disperser, a homogenizer, a planetary mixer, or a FILMIX.

<<Formation of electrode mixed material layer>>

Formation of the electrode mixed material layer using the slurry composition described above can be performed by, for example, supplying the slurry composition onto the current collector and then drying the slurry composition.

A method in which supply and drying of the slurry composition are repeated multiple times may be adopted in order to control the number A of thermally decomposable sites in a surface region and the number B of thermally decomposable sites in a deep region of the obtained electrode mixed material layer.

For example, a first slurry composition and a second slurry composition having a higher concentration of the thermally decomposable material than the first slurry composition may be prepared. The first slurry composition is supplied onto at least one side of the current collector and dried, and then the second slurry composition is supplied onto the dried product of the first slurry composition and is dried. This method makes it possible to increase the number A of thermally decomposable sites in the surface region and enables simple formation of an electrode mixed material layer having specific properties.

The method by which a slurry composition is applied onto the current collector or the like is not specifically limited and may be a commonly known method. Specific examples of application methods that can be used include doctor blading, dip coating, reverse roll coating, direct roll coating, gravure coating, extrusion coating, and brush coating. The thickness of the slurry coating on the current collector after application but before drying may be set as appropriate in accordance with the thickness of the electrode mixed material layer to be obtained through drying.

The method by which the slurry composition on the current collector or the like is dried is not specifically limited and may be a commonly known method. Examples of drying methods that can be used include drying by warm, hot, or low-humidity air; drying in a vacuum; and drying by irradiation with infrared light, electron beams, or the like.

After the drying, the electrode mixed material layer may be further subjected to a pressing process, such as

mold pressing or roll pressing. The pressing process can improve peel strength of the electrode.

(Electrochemical device)

A feature of the presently disclosed electrochemical device is that it includes the electrode for an electrochemical device set forth above. The presently disclosed electrochemical device may, for example, be a lithium ion secondary battery, an electric double-layer capacitor, or a lithium ion capacitor, but is not specifically limited thereto, and is preferably a lithium ion secondary battery. As a result of the presently disclosed electrochemical device including the presently disclosed electrode, heat generation in the event of an internal short circuit is sufficiently inhibited, and the electrochemical device maintains a high level of safety. In addition, the presently disclosed electrochemical device has low IV resistance and excellent device characteristics such as output characteristics.

Although the following describes, as one example, a case in which the electrochemical device is a lithium ion secondary battery, the present disclosure is not limited to the following example. A lithium ion secondary battery that is an example of the presently disclosed electrochemical device normally includes electrodes (positive electrode and negative electrode), an electrolyte solution, and a separator, and has the presently disclosed electrode for an electrochemical device as at least one of the positive electrode and the negative electrode.

<Electrodes>

Examples of electrodes other than the presently disclosed electrode for an electrochemical device set forth above that can be used in the lithium ion secondary battery that is an example of the presently disclosed electrochemical device include known electrodes without any specific limitations. Specifically, an electrode obtained by forming an electrode mixed material layer on a current collector by a known production method may be used as an electrode other than the electrode for an electrochemical device set forth above.

<Electrolyte solution>

The electrolyte solution is normally an organic electrolyte solution obtained by dissolving a supporting electrolyte in an organic solvent. The supporting electrolyte may, for example, be a lithium salt. Examples of lithium salts that can be used include $LiPF_6$, $LiAsF_6$, $LiBF_4$, $LiSbF_6$, $LiAlCl_4$, $LiClO_4$, $CF_3SO_3Li$, $C_4F_9SO_3Li$, $CF_3COOLi$, $(CF_3CO)_2NLi$, $(CF_3SO_2)_2NLi$, and $(C_2F_5SO_2)NLi$. Of these lithium salts, $LiPF_6$, $LiClO_4$, and $CF_3SO_3Li$ are preferable because they readily dissolve in solvents and exhibit a high degree of dissociation, with $LiPF_6$ being particularly preferable. One electrolyte may be used individually, or two or more electrolytes may be used in combination in a freely selected ratio. In general, lithium ion conductivity tends to increase when a supporting electrolyte having a high degree of dissociation is used. Therefore, lithium ion conductivity can be adjusted through the type of supporting electrolyte that is used.

The organic solvent used in the electrolyte solution is not specifically limited so long as the supporting electrolyte can dissolve therein. Examples of suitable organic solvents include carbonates such as dimethyl carbonate (DMC), ethylene carbonate (EC), diethyl carbonate (DEC), propylene carbonate (PC), butylene carbonate (BC), and methyl ethyl carbonate (EMC); esters such as $\gamma$-butyrolactone and methyl formate; ethers such as 1,2-dimethoxyethane and tetrahydrofuran; and sulfur-containing compounds such as sulfolane and dimethyl sulfoxide. Furthermore, a mixture of such solvents may be used. Of these solvents, carbonates are preferable due to having a high permittivity and a wide stable potential region, and a mixture of ethylene carbonate and ethyl methyl carbonate is more preferable.

The concentration of the electrolyte in the electrolyte solution can be adjusted as appropriate and is, for example, preferably 0.5 mass% to 15 mass%, more preferably 2 mass% to 13 mass%, and even more preferably 5 mass% to 10 mass%. Known additives such as vinylene carbonate, fluoroethylene carbonate, and ethyl methyl sulfone may be added to the electrolyte solution.

<Separator>

Examples of separators that can be used include, but are not specifically limited to, those described in JP2012-204303A. Of these separators, a microporous membrane formed of polyolefinic (polyethylene, polypropylene, polybutene, or polyvinyl chloride) resin is preferred since such a membrane can reduce the total thickness of the separator, which increases the ratio of electrode active material particles in the lithium ion secondary battery, and consequently increases the volumetric capacity. A functional layer-equipped separator that includes a functional layer (porous membrane layer or adhesive layer) at one side or both sides of a separator substrate may be used as the separator.

<Production method of lithium ion secondary battery>

The lithium ion secondary battery in accordance with the present disclosure can be produced by, for example, stacking the positive electrode and the negative electrode with the separator in-between, performing rolling, folding, or the like of the resultant laminate in accordance with the battery shape, as necessary, to place the laminate in a battery container, injecting the electrolyte solution into the battery container, and sealing the battery container. In order to prevent pressure increase inside the secondary battery and occurrence of overcharging or overdischarging, an overcurrent preventing device such as a fuse or a PTC device; an expanded metal; or a lead plate may be provided as necessary. The shape of the secondary battery may be a coin type, button type, sheet type, cylinder type, prismatic type, flat type, or the like.

EXAMPLES

The following provides a more specific description of the present disclosure based on examples. However, the present disclosure is not limited to the following examples. In the following description, "%" and "parts" used in expressing quantities are by mass, unless otherwise specified.

Moreover, in the case of a polymer that is produced through copolymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

In the examples and comparative examples, the following methods were used to measure or evaluate the thermal decomposition temperature of a foaming agent, the average particle diameter (number-average particle diameter, volume-average particle diameter, and particle diameter ratio) and circularity of a thermally decomposable material including a foaming agent, the proportion constituted by the amount of a surfactant among the total amount of a foaming agent and a surfactant in a thermally decomposable material, the number of thermally decomposable sites (number A for a surface region and number B for a deep region) in a cross-section of an electrode mixed material layer, and the IV resistance and inhibition of heat generation in the event of an internal short circuit of a lithium ion secondary battery.

<Thermal decomposition temperature>

The weight of a foaming agent was measured while the foaming agent was heated from 25°C to 500°C at a heating rate of 10°C/min under a nitrogen atmosphere in thermogravimetric analysis using a thermogravimetry/differential thermal analyzer (produced by Hitachi High-Tech Science Corporation; product name: TG/DTA7200). The temperature (5% weight loss temperature) at which the measured weight reached 95% of the weight at the start of measurement (25°C) was taken to be the thermal decomposition temperature of the foaming agent.

<Average particle diameter>

The number-average particle diameter and volume-average particle diameter of a thermally decomposable material were measured using a laser diffraction particle size distribution analyzer (produced by MicrotracBEL Corp.; product name: MT3000II). In addition, the particle diameter ratio was calculated.

<Circularity>

The circularity of a thermally decomposable material was evaluated by using a particle image analyzer (produced by Malvern Panalytical Ltd.; product name: Morphologi® G3 (Morphologi is a registered trademark in Japan, other countries, or both)) to measure the circularity of each of 1,000 particles and calculate an average value of these measurements.

<Proportion of amount of surfactant among total amount of foaming agent and surfactant>

The weight of a thermally decomposable material was measured while the thermally decomposable material was heated from 25°C to 500°C at a heating rate of 10°C/min under a nitrogen atmosphere in thermogravimetric analysis using a thermogravimetry/differential thermal analyzer (produced by Hitachi High-Tech Science Corporation; product name: TG/DTA7200). Weight loss other than that at the thermal decomposition temperature of a foaming agent was calculated as the content of a surfactant.

<Number of thermally decomposable sites>

A positive electrode was subjected to an observation sectioning process using a Cross Section Polisher (produced by JEOL Ltd.; product name: IB-09020CP). Next, an SEM-EPMA (produced by JEOL Ltd.; product name: JXA-8530F Plus) was used to perform nitrogen element mapping of a mixed material layer cross-section. Note that conditions of an observation magnification of ×1300 (magnification at which the entire thickness direction of a positive electrode mixed material layer can be observed), an irradiation voltage of 10 kV, and an irradiation current of $1.0 \times 10^{-8}$ A were adopted. Detection of nitrogen intensity was performed using a wavelength dispersive detector. A spectrometer (produced by JEOL Ltd.; product name: LDH5E) was used to separate Ka primary rays of X-rays in order to detect the intensity for nitrogen element. Measurement was performed while performing scanning in a 0.4 μm × 0.4 μm interval, and detection was performed for a length of 30 ms at 1 point. The following method was then used with respect to the obtained mapping image in order to count the number of thermally decomposable sites having a circumscribed circle diameter of not less than 1.0 μm and not more than 10.0 μm. Note that in this counting, a thermally decomposable site present at the boundary of an analysis range was counted as being included in the analysis range.

1) An analysis range that included the entire thickness direction of the positive electrode mixed material layer and was 50 μm in a width direction (direction perpendicular to the thickness direction) was arbitrarily selected (i.e., a range of "positive electrode mixed material layer thickness × 50 μm (width direction)" was selected). Note that the area of the analysis range was taken to be M ($\mu m^2$)
2) A number X of sites having a nitrogen element intensity of 50 (CPS) or more and a circumscribed circle diameter of not less than 1.0 μm and not more than 10 μm was counted for a surface region (area: 0.1M $\mu m^2$) of the selected analysis range, and then a solution obtained by an equation: X/0.1M × 50 was rounded down to the nearest whole number and was taken to be a number A (sites/50 $\mu m^2$).
3) A number Y of sites having a nitrogen element intensity of 50 (CPS) or more and a circumscribed circle diameter of not less than 1.0 μm and not more than 10 μm was counted for a deep region (area: 0.9M $\mu m^2$) of the selected analysis range, and then a solution obtained by an equation: Y/0.9M × 50 was rounded down to the nearest whole number and was taken to be a number B (sites/50 $\mu m^2$).

<IV resistance>

A lithium ion secondary battery was left at rest at a temperature of 25°C for 5 hours after injection of electrolyte solution. Next, the lithium ion secondary battery was charged to a cell voltage of 3.65 V by a 0.2C constant-current method at a temperature of 25°C and was then subjected to 12 hours of aging at a temperature of 60°C. The lithium ion secondary battery was subsequently discharged to a cell voltage of 3.00 V by a 0.2C constant-current method at a temperature of 25°C. Thereafter, the lithium ion secondary battery was CC-CV charged (upper limit cell voltage: 4.35 V) by a 0.2C constant-current method and CC discharged to 3.00 V by a 0.2C constant-current method. This charging and discharging at 0.2C was repeated three times. Thereafter, the lithium ion secondary battery was subjected to an operation of charging to a state of charge (SOC) of 50% at 0.2C in a 25°C environment. The lithium ion secondary battery was then left at rest for 600 seconds. The voltage at the 600th second was taken to be $V_0$. Thereafter, 10 seconds of discharging was performed by a 0.5C (= $I_{0.5}$) constant-current method, and the voltage at the 10th second was taken to be $V_{0.5}$. Charging was then performed by a 0.2C constant-current method for the amount of electricity discharged directly beforehand. Next, 10 seconds of discharging was performed by a 1.0C (= $I_{1.0}$) constant-current method, and the voltage at the 10th second was taken to be $V_{1.0}$. Charging was then performed by a 0.2C constant-current method for the amount of electricity discharged directly beforehand. Next, 10 seconds of discharging was performed by a 1.5C (= $I_{1.5}$) constant-current method, and the voltage at the 10th second was taken to be $V_{1.5}$. ($I_{0.5}$,$V_{0.5}$), ($I_{1.0}$,$V_{1.0}$), and ($I_{1.5}$,$V_{1.5}$) were plotted on an XY graph, the gradient b of a regression line was determined by the following formula, and this gradient b was taken to be DCR (direct current resistance).

[Math. 1]

$$b = \frac{\sum (x-\bar{x})(y-\bar{y})}{\sum (x-\bar{x})^2}$$

A DCR relative value was calculated for each example by taking the DCR in Example 1 to be 100 and was evaluated by the following standard. A smaller DCR relative value indicates that the lithium ion secondary battery has

lower IV resistance.

A: DCR relative value of 103 or less
B: DCR relative value of more than 103 and not more than 105
C: DCR relative value of more than 105 and not more than 110
D: DCR relative value of more than 110

inhibition of heat generation in event of internal short circuit (forced internal short circuit test)>

A lithium ion secondary battery of each example or comparative example was left at rest at a temperature of 25°C for 5 hours after injection of electrolyte solution. Next, the lithium ion secondary battery was charged to a cell voltage of 3.65 V by a 0.2C constant-current method at a temperature of 25°C and was then subjected to 12 hours of aging at a temperature of 60°C. The lithium ion secondary battery was subsequently discharged to a cell voltage of 3.00 V by a 0.2C constant-current method at a temperature of 25°C. Thereafter, the lithium ion secondary battery was CC-CV charged (upper limit cell voltage: 4.35 V) by a 0.2C constant-current method and CC discharged to 3.00 V by a 0.2C constant-current method. This charging and discharging at 0.2C was repeated three times. The lithium ion secondary battery was subsequently charged to 4.35 V (cut-off condition: 0.02C) by a constant-voltage constant-current (CC-CV) method at a charge rate of 0.2C in a 25°C atmosphere. Thereafter, an iron nail of 3 mm in diameter and 10 cm in length was caused to pierce the lithium ion secondary battery at an approximately central location at a speed of 5 m/min so as to cause a forced short circuit. A forced short circuit was performed for each of 5 lithium ion secondary batteries (test subjects) prepared by the same operations, and an evaluation was made by the following standard based on the number of test subjects in which rupturing and ignition did not occur. A larger number of test subjects in which rupturing and ignition do not occur indicates that the lithium ion secondary battery has better inhibition of heat generation in the event of an internal short circuit.

A: Number of test subjects in which rupturing and ignition do not occur is 4 or 5
B: Number of test subjects in which rupturing and ignition do not occur is 3
C: Number of test subjects in which rupturing and ignition do not occur is 2
D: Number of test subjects in which rupturing and ignition do not occur is 1 or 0

(Example 1)

<Production of binder>

An autoclave equipped with a stirrer was charged with 240 parts of deionized water, 2.5 parts of sodium alkylbenzene sulfonate, 30 parts of acrylonitrile as a nitrile group-containing monomer, 5 parts of methacrylic acid as a carboxy group-containing monomer, and 0.25 parts of t-dodecyl mercaptan as a chain transfer agent in this order, and then the inside of a bottle was purged with nitrogen. Thereafter, 65 parts of 1,3-butadiene as an aliphatic conjugated diene monomer was injected, 0.25 parts of ammonium persulfate was added, and a polymerization reaction was performed at a reaction temperature of 40°C. This yielded a polymer including acrylonitrile units, methacrylic acid units, and 1,3-butadiene units. The polymerization conversion rate was 85%.

The obtained polymer was adjusted to a total solid content concentration of 12% with water, 400 mL (total solid content: 48 g) of the solution was loaded into a stirrer-equipped autoclave of 1 L in capacity, and dissolved oxygen in the solution was removed by passing nitrogen gas for 10 minutes. Thereafter, 75 mg of palladium acetate as a hydrogenation reaction catalyst was dissolved in 180 mL of deionized water to which 4 molar equivalents of nitric acid relative to Pd had been added and was added into the autoclave. The system was purged twice with hydrogen gas, and then the contents of the autoclave were heated to 50°C in a state in which the pressure was raised to 3 MPa with hydrogen gas, and a hydrogenation reaction (first stage hydrogenation reaction) was performed for 6 hours.

Next, the autoclave was restored to atmospheric pressure, and 25 mg of palladium acetate as a hydrogenation reaction catalyst was dissolved in 60 mL of water to which 4 molar equivalents of nitric acid relative to Pd had been added and was added into the autoclave. The system was purged twice with hydrogen gas, and then the contents of the autoclave were heated to 50°C in a state in which the pressure was raised to 3 MPa with hydrogen gas, and a hydrogenation reaction (second stage hydrogenation reaction) was performed for 6 hours to yield a water dispersion of hydrogenated nitrile rubber. An appropriate amount of NMP was added to the obtained water dispersion of the hydrogenated nitrile rubber to obtain a mixture. Thereafter, vacuum distillation was performed at 90°C so as to remove water and excess NMP from the mixture and yield an NMP solution (solid content concentration: 8%) of the hydrogenated nitrile rubber.

<Production of thermally decomposable material>

Equimolar amounts of melamine (63.0 g) that had been pulverized to a volume-average particle diameter of 100 μm and cyanuric acid (64.5 g) were added into a reactor. Thereafter, 1% of potassium hydroxide was added relative to 100%, in total, of melamine and cyanuric acid, and deionized water was further added to adjust the solid content concentration to 55% and obtain a mixture. This mixture was subsequently heated to 75°C under stirring and was stirred for 120 minutes to prepare a slurry containing melamine cyanurate (foaming agent; thermal decomposition temperature: 350°C) as a core of a thermally decomposable material. A slurry composition for a thermally decomposable material was then obtained by adding 3 parts of sodium stearate (molecular weight: 306.5 g/mol; melting point: 305°C), which is an anionic surfactant, to the obtained slurry relative to 97 parts of melamine cyanurate, adding deionized water so as to adjust the solid content concentration to 20%, and performing 30 minutes of stirring. The obtained slurry composition was dried by spray drying at 140°C to yield a thermally decomposable material. The average particle diameter and circularity of this thermally decomposable material and the proportion constituted by the amount of the surfactant among the total amount of the foaming agent and the surfactant in the thermally decomposable material were measured, and the particle diameter ratio of the thermally decomposable material was calculated. The results are shown in Table 1.

<Production of binder composition>

A binder composition having a solid content concentration of 8% was produced by mixing 100 parts (in terms of solid content) of the NMP solution of the hydrogenated nitrile rubber and 100 parts of the thermally decomposable material, and further adding NMP.

<Production of slurry composition for positive electrode>

A slurry composition for a positive electrode was obtained by loading 96 parts of lithium cobalt oxide as a positive electrode active material, 2.0 parts in terms of solid content of carbon black (produced by Denka Company Limited; product name: Li-100) as a conductive material, and 2.0 parts in terms of solid content of the above-described binder composition into a planetary mixer, mixing these materials, gradually further adding NMP, and performing stirred mixing at a rotation speed of 60 rpm and a temperature of 25 ± 3°C to adjust the viscosity as measured by a B-type viscometer at 60 rpm (M4 rotor) and 25 ± 3°C to 3,600 mPa·s.

<Production of positive electrode (single coating)>

The slurry composition for a positive electrode was applied onto aluminum foil of 20 μm in thickness serving as a current collector by a comma coater such as to have a coating weight of 20 ± 0.5 mg/cm$^2$. The aluminum foil was conveyed inside an oven having a temperature of 90°C for 2 minutes and an oven having a temperature of 120°C for 2 minutes at a speed of 0.5 m/min so as to dry the slurry composition for a positive electrode on the aluminum foil and thereby obtain a positive electrode web having a positive electrode mixed material layer formed on the current collector. The positive electrode mixed material layer-side of the produced positive electrode web was subsequently roll pressed with a load of 14 t (tons) in an environment having a temperature of 25 ± 3°C to obtain a positive electrode having a positive electrode mixed material layer density of 3.80 g/cm$^3$ and a positive electrode mixed material layer thickness of 53 μm. The number A of thermally decomposable sites was measured for the obtained positive electrode. The result is shown in Table 1.

<Production of negative electrode>

A 5 MPa pressure-resistant vessel equipped with a stirrer was charged with 63 parts of styrene as an aromatic vinyl monomer, 34 parts of 1,3-butadiene as an aliphatic conjugated diene monomer, 2 parts of itaconic acid as a carboxy group-containing monomer, 1 part of 2-hydroxyethyl acrylate as a hydroxyl group-containing monomer, 0.3 parts of t-dodecyl mercaptan as a molecular weight modifier, 5 parts of sodium dodecylbenzenesulfonate as an emulsifier, 150 parts of deionized water as a solvent, and 1 part of potassium persulfate as a polymerization initiator. These materials were thoroughly stirred and were then heated to a temperature of 55°C to initiate polymerization. Cooling was performed to quench the reaction at the point at which monomer consumption reached 95.0%. The water dispersion containing a polymer that was obtained in this manner was adjusted to pH 8 through addition of 5% sodium hydroxide aqueous solution. Unreacted monomer was subsequently removed through thermal-vacuum distillation. Thereafter, cooling was performed to a temperature of 30°C or lower to yield a water dispersion (binder composition for a negative electrode) containing a binder for a negative electrode.

A planetary mixer was charged with 48.75 parts of artificial graphite (theoretical capacity: 360 mAh/g) and 48.75

parts of natural graphite (theoretical capacity: 360 mAh/g) as negative electrode active materials and 1 part in terms of solid content of carboxymethyl cellulose as a thickener. These materials were diluted to a solid content concentration of 60% with deionized water and were then kneaded at a rotation speed of 45 rpm for 60 minutes. Thereafter, 1.5 parts in terms of solid content of the binder composition for a negative electrode obtained as described above was added and was kneaded therewith at a rotation speed of 40 rpm for 40 minutes. Deionized water was then added to adjust the viscosity to 3,000 ± 500 mPa·s (measured at 25°C and 60 rpm using a B-type viscometer) and thereby produce a slurry composition for a negative electrode.

The slurry composition for a negative electrode was applied onto the surface of copper foil of 15 μm in thickness serving as a current collector by a comma coater such as to have a coating weight of 11 ± 0.5 mg/cm$^2$. The copper foil onto which the slurry composition for a negative electrode had been applied was subsequently conveyed inside an oven having a temperature of 80°C for 2 minutes and an oven having a temperature of 110°C for 2 minutes at a speed of 400 mm/min so as to dry the slurry composition for a negative electrode on the copper foil and thereby obtain a negative electrode web having a negative electrode mixed material layer formed on the current collector. The negative electrode mixed material layer-side of the produced negative electrode web was subsequently roll pressed with a line pressure of 11 t (tons) in an environment having a temperature of 25 ± 3°C to obtain a negative electrode having a negative electrode mixed material layer density of 1.60 g/cm$^3$.

<Preparation of separator>

A separator made of a single layer of polypropylene (produced by Celgard, LLC.; product name: #2500) was prepared.

<Production of lithium ion secondary battery>

The positive electrode, the negative electrode, and the separator were used to produce a stacked laminate cell (initial design discharge capacity equivalent to 3 Ah) and were arranged inside aluminum packing. Vacuum drying was performed under conditions of 10 hours at 60°C. The aluminum packing was subsequently filled with $LiPF_6$ solution of 1.0 M in concentration (solvent: mixed solvent of ethylene carbonate (EC)/diethyl carbonate (DEC) = 3/7 (volume ratio); additive: containing 2 volume% (solvent ratio) of vinylene carbonate) as an electrolyte solution. The aluminum packing was then closed by heat sealing at a temperature of 150°C to tightly seal an opening of the aluminum packing, and thereby produce a lithium ion secondary battery. IV resistance and inhibition of heat generation in the event of an internal short circuit were evaluated for the obtained lithium ion battery. The results are shown in Table 1.

(Example 2)

A binder, a negative electrode, a separator, and a lithium ion secondary battery were prepared and various evaluations were performed in the same way as in Example 1 with the exception that a thermally decomposable material, a binder composition, a slurry composition for a positive electrode, and a positive electrode produced as described below were used. The results are shown in Table 1.

<Production of thermally decomposable material>

Equimolar amounts of melamine (63.0 g) and cyanuric acid (64.5 g) that had been pulverized to a volume-average particle diameter of 100 μm were added into a reactor. Thereafter, 1% of potassium hydroxide was added relative to 100%, in total, of melamine and cyanuric acid, and deionized water was further added to adjust the solid content concentration to 55% and obtain a mixture. This mixture was subsequently heated to 75°C under stirring and was stirred for 120 minutes to obtain a slurry composition for a thermally decomposable material containing melamine cyanurate (foaming agent). The obtained slurry composition was dried by spray drying at 140°C to yield a thermally decomposable material.

<Production of binder composition>

<<Production of first binder composition>>

A first binder composition having a solid content concentration of 8% was produced by mixing 100 parts (in terms of solid content) of an NMP solution of hydrogenated nitrile rubber obtained in the same way as in Example 1 and 50 parts of the thermally decomposable material described above, and further adding NMP.

<<Production of second binder composition>>

A second binder composition having a solid content concentration of 8% was produced by mixing 100 parts (in terms of solid content) of an NMP solution of hydrogenated nitrile rubber obtained in the same way as in Example 1 and 150 parts of the thermally decomposable material described above, and further adding NMP.

<Production of slurry composition for positive electrode>

<<Production of first slurry composition>>

A first slurry composition was obtained by loading 96.5 parts of lithium cobalt oxide as a positive electrode active material, 2.0 parts in terms of solid content of carbon black (produced by Denka Company Limited; product name: Li-100) as a conductive material, and 1.5 parts in terms of solid content of the first binder composition into a planetary mixer, mixing these materials, gradually further adding NMP, and performing stirred mixing at a rotation speed of 60 rpm and a temperature of 25 ± 3°C to adjust the viscosity as measured by a B-type viscometer at 60 rpm (M4 rotor) and 25 ± 3°C to 3,600 mPa·s.

<<Production of second slurry composition>>

A second slurry composition was obtained by loading 95.5 parts of lithium cobalt oxide as a positive electrode active material, 2.0 parts in terms of solid content of carbon black (produced by Denka Company Limited; product name: Li-100) as a conductive material, and 2.5 parts in terms of solid content of the second binder composition into a planetary mixer, mixing these materials, gradually further adding NMP, and performing stirred mixing at a rotation speed of 60 rpm and a temperature of 25 ± 3°C to adjust the viscosity as measured by a B-type viscometer at 60 rpm (M4 rotor) and 25 ± 3°C to 3,600 mPa·s.

<Production of positive electrode (double coating)>

The first slurry composition was applied onto aluminum foil of 20 μm in thickness serving as a current collector by a comma coater such as to have a coating weight of 10 ± 0.5 mg/cm$^2$. The aluminum foil was conveyed inside an oven having a temperature of 90°C for 2 minutes and an oven having a temperature of 120°C for 2 minutes at a speed of 0.5 m/min so as to dry the first slurry composition on the aluminum foil and thereby obtain a laminate having a dried product of the first slurry composition formed on the current collector.

Next, the second slurry composition was applied onto the dried product of the laminate by a comma coater such as to have a coating weight of 10 ± 0.5 mg/cm$^2$. The laminate was conveyed inside an oven having a temperature of 90°C for 2 minutes and an oven having a temperature of 120°C for 2 minutes at a speed of 0.5 m/min so as to dry the second slurry composition on the laminate and thereby obtain a positive electrode web having a positive electrode mixed material layer formed on the current collector. The positive electrode mixed material layer-side of the produced positive electrode web was subsequently roll pressed with a load of 14 t (tons) in an environment having a temperature of 25 ± 3°C to obtain a positive electrode having a positive electrode mixed material layer density of 3.80 g/cm$^3$ and a positive electrode mixed material layer thickness of 53 μm.

(Example 3)

A binder, a binder composition, a slurry composition for a positive electrode, a positive electrode, a negative electrode, a separator, and a lithium ion secondary battery were prepared and various evaluations were performed in the same way as in Example 1 with the exception that a thermally decomposable material produced in the same way as in Example 2 was used. The results are shown in Table 1.

(Example 4)

A binder, a thermally decomposable material, a binder composition, a slurry composition for a positive electrode, a positive electrode, a negative electrode, a separator, and a lithium ion secondary battery were prepared and various evaluations were performed in the same way as in Example 1 with the exception that the solid content concentration of the mixture used to obtain melamine cyanurate in production of the thermally decomposable material was changed from 55% to 60%. The results are shown in Table 1.

(Example 5)

A binder, a binder composition, a slurry composition for a positive electrode, a positive electrode, a negative electrode, a separator, and a lithium ion secondary battery were prepared and various evaluations were performed in the same way as in Example 1 with the exception that a thermally decomposable material produced as described below was used. The results are shown in Table 1.

<Production of thermally decomposable material>

Equimolar amounts of melamine (63.0 g) and cyanuric acid (64.5 g) that had been pulverized to a volume-average particle diameter of 100 μm were added into a reactor. Thereafter, 1% of potassium hydroxide was added relative to 100%, in total, of melamine and cyanuric acid, and deionized water was further added to adjust the solid content concentration to 60% and obtain a mixture. This mixture was subsequently heated to 75°C under stirring and was stirred for 120 minutes to obtain a slurry composition for a thermally decomposable material containing melamine cyanurate (foaming agent; thermal decomposition temperature: 350°C). The obtained slurry composition was dried by spray drying at 140°C to yield a thermally decomposable material.

(Example 6)

A binder, a binder composition, a slurry composition for a positive electrode, a positive electrode, a negative electrode, a separator, and a lithium ion secondary battery were prepared and various evaluations were performed in the same way as in Example 1 with the exception that a thermally decomposable material produced as described below was used. The results are shown in Table 1.

<Production of thermally decomposable material>

Deionized water was added to 100.0 g of azodicarbonamide (thermal decomposition temperature: 150°C) as a foaming agent so as to adjust the solid content concentration to 20%, and then a Three-One Motor (produced by SHINTO Scientific Co., Ltd.; product name: BL300) was used to produce a pre-dispersion (premix). A bead mill (produced by Ashizawa Finetech Ltd.; product name: LMZ-015) was then used to treat the obtained pre-dispersion for 5 minutes under conditions of a bead diameter of 1.0 mm, a bead loading rate of 80%, and a circumferential speed of 8 m/s to thereby produce a slurry containing azodicarbonamide as a core of a thermally decomposable material. A slurry composition for a thermally decomposable material was then obtained by adding 3 parts of sodium stearate (molecular weight: 306.5 g/mol; melting point: 305°C), which is an anionic surfactant, to the obtained slurry relative to 97 parts of azodicarbonamide and performing 30 minutes of stirring. The obtained slurry composition was dried by spray drying at 140°C to yield a thermally decomposable material.

(Comparative Example 1)

A binder, a binder composition, a slurry composition for a positive electrode, a positive electrode, a negative electrode, a separator, and a lithium ion secondary battery were prepared and various evaluations were performed in the same way as in Example 1 with the exception that a thermally decomposable material produced as described below was used. The results are shown in Table 1.

<Production of thermally decomposable material>

Equimolar amounts of melamine (63.0 g) and cyanuric acid (64.5 g) that had been pulverized to a volume-average particle diameter of 100 μm were added into a reactor. Thereafter, 1% of potassium hydroxide was added relative to 100%, in total, of melamine and cyanuric acid, and deionized water was further added to adjust the solid content concentration to 55% and obtain a mixture. This mixture was subsequently heated to 75°C under stirring and was stirred for 120 minutes to prepare a slurry containing melamine cyanurate (foaming agent; thermal decomposition temperature: 350°C). The obtained slurry was dried at 80°C for 12 hours, and the resultant dried product was subjected to spheroidization using a mechanical spheroidization device (produced by EarthTechnica Co., Ltd.; product name: KRYPTRON ORB CSH0). Deionized water was added to the dried product that had undergone spheroidization so as to adjust the solid content concentration to 55% and obtain a slurry composition for a thermally decomposable material. The obtained slurry composition was dried by spray drying at 140°C to yield a thermally decomposable material.

(Comparative Example 2)

A binder, a binder composition, a slurry composition for a positive electrode, a positive electrode, a negative electrode, a separator, and a lithium ion secondary battery were prepared and various evaluations were performed in the same way as in Example 1 with the exception that a thermally decomposable material produced as described below was used. The results are shown in Table 1.

<Production of thermally decomposable material>

Deionized water was added to melamine cyanurate (produced by Nissan Chemical Industries, Ltd.; product name: MC-6000) to adjust the solid content concentration to 55% and obtain a slurry composition for a thermally decomposable material containing melamine cyanurate (foaming agent). The obtained slurry composition was dried by spray drying at 140°C to yield a thermally decomposable material.

In Table 1, shown below:

"HNBR" indicates hydrogenated nitrile rubber;
"MC" indicates melamine cyanurate; and
"ADCA" indicates azodicarbonamide.

[Table 1]

Table 1

| | | | | Example 1 | Example 2 | Example 3 | Example 4 | Example 5 | Example 6 | Comparative Example 1 | Comparative Example 2 |
|---|---|---|---|---|---|---|---|---|---|---|---|
| Positive electrode mixed material layer | Foaming agent (thermally decomposable sites) | Foaming agent | Type | MC | MC | MC | MC | MC | ADCA | MC | MC |
| | | | Thermal decomposition temperature [°C] | 350 | 350 | 350 | 350 | 350 | 150 | 350 | 350 |
| | | Number A [sites/50 $\mu m^2$] | | 13 | 16 | 10 | 35 | 35 | 15 | 10 | 32 |
| | | Number B [sites/50 $\mu m^2$] | | 8 | 7 | 9 | 25 | 32 | 9 | 11 | 40 |
| | | Ratio of number A relative to number B [-] | | 1.625 | 2.286 | 1.111 | 1.400 | 1.094 | 1.667 | 0.909 | 0.800 |
| | Binder | | | HNBR | HNBR | HNBR | HNBR | HNBR | HNBR | HNBR | HNBR |
| | Surfactant (covering sites) | | | Sodium stearate | | | Sodium stearate | | Sodium stearate | | |
| Thermally decomposable material | Number-average particle diameter [$\mu m$] | | | 1.1 | 1.0 | 1.0 | 1.1 | 1.0 | 1.2 | 1 | 0.1 |
| | Volume-average particle diameter [$\mu m$] | | | 2.2 | 2.1 | 2.1 | 4.0 | 3.8 | 2.5 | 1.9 | 3.8 |
| | Particle diameter ratio [-] | | | 0.5 | 0.48 | 0.48 | 0.28 | 0.26 | 0.48 | 0.53 | 003 |
| | Circularity [-] | | | 0.82 | 0.8 | 0.8 | 0.82 | 0.79 | 0.8 | 0.97 | 0.81 |
| | Proportion of surfactant [mass%] | | | 3 | 0 | 0 | 3 | 0 | 3 | 0 | 0 |
| Production of mixed material layer | | | | Single coating | Double coating | Single coating | Single coating | Single coating | Single coating | Single coating | Single coating |
| Heat generation inhibition | | | | A | A | A | A | A | A | A | A |
| IV resistance | | | | A | A | B | B | C | C | D | D |

It can be seen from Table 1 that it is possible to sufficiently inhibit heat generation in the event of an internal short circuit of an electrochemical device and reduce IV resistance of the electrochemical device in Examples 1 to 6 in which a foaming agent having a thermal decomposition temperature that is within a specific range is contained together with an electrode active material and a binder in an electrode mixed material layer formed on a current collector and in which thermally decomposable sites formed of the foaming agent are disposed such as to satisfy a specific condition.
In contrast, it can be seen from Table 1 that although heat generation in the event of an internal short circuit of an electrochemical device can be sufficiently inhibited, IV resistance increases in Comparative Examples 1 and 2 in which thermally decomposable sites do not satisfy a specific condition (i.e., in which the number A is smaller than the number B).

INDUSTRIAL APPLICABILITY

According to the present disclosure, it is possible to provide an electrode for an electrochemical device that can sufficiently inhibit heat generation in the event of an internal short circuit of an electrochemical device and reduce IV resistance of the electrochemical device.
Moreover, according to the present disclosure, it is possible to provide an electrochemical device in which heat generation in the event of an internal short circuit is sufficiently inhibited and that has low IV resistance.

REFERENCE SIGNS LIST

100 electrode for electrochemical device
10 electrode mixed material layer
11 electrode active material
12 binder
13 foaming agent (thermally decomposable site)
14 conductive material
20 current collector
a surface region
b deep region

**Claims**

1. An electrode for an electrochemical device comprising: a current collector; and an electrode mixed material layer formed on the current collector, wherein

    the electrode mixed material layer contains an electrode active material, a binder, and a foaming agent having a thermal decomposition temperature of not lower than 150°C and not higher than 400°C, and
    in a cross-section of the electrode mixed material layer in a thickness direction,

        thermally decomposable sites formed of the foaming agent and having a circumscribed circle diameter of not less than 1.0 $\mu m$ and not more than 10.0 $\mu m$ are present, and
        a number A of the thermally decomposable sites per 50 $\mu m^2$ in a surface region of the electrode mixed material layer that is from 0% to 10% in the thickness direction with a surface at an opposite side to the current collector as a reference is larger than a number B of the thermally decomposable sites per 50 $\mu m^2$ in a deep region of the electrode mixed material layer that is from 0% to 90% in the thickness direction with a surface at a side corresponding to the current collector as a reference.

2. The electrode for an electrochemical device according to claim 1, wherein the number A is not less than 3 and not more than 50.

3. The electrode for an electrochemical device according to claim 1 or 2, wherein a ratio of the number A relative to the number B is more than 1.1 and less than 30.

4. The electrode for an electrochemical device according to any one of claims 1 to 3, wherein the binder is a polymer including one or more functional groups selected from the group consisting of a carboxy group, a hydroxyl group,

a nitrile group, an amino group, an epoxy group, an oxazoline group, a sulfo group, an ester group, and an amide group.

**5.** The electrode for an electrochemical device according to any one of claims 1 to 4, wherein the foaming agent is a nitrogenous foaming agent.

**6.** An electrochemical device comprising the electrode for an electrochemical device according to any one of claims 1 to 5.

FIG. 1

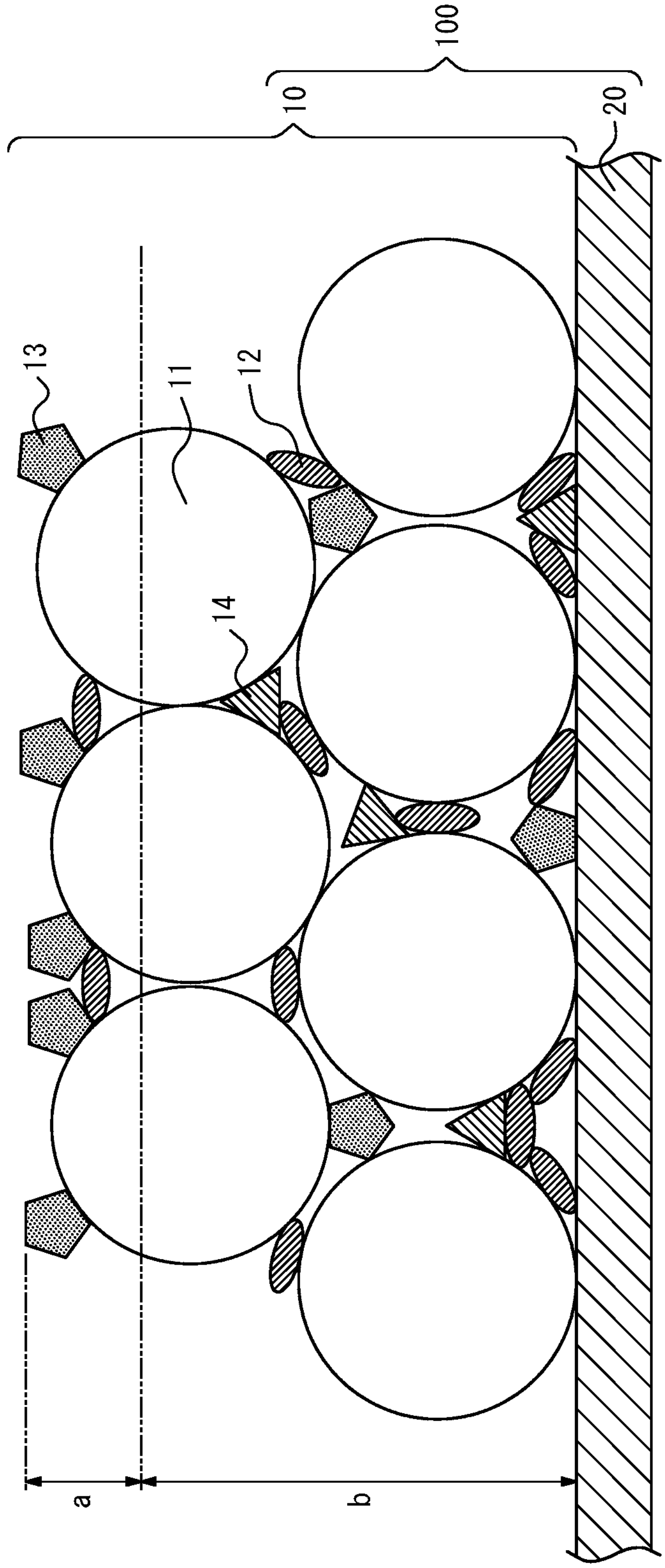

**INTERNATIONAL SEARCH REPORT**

International application No.
**PCT/JP2021/038308**

**A. CLASSIFICATION OF SUBJECT MATTER**

***H01M 4/62***(2006.01)i; ***H01G 11/06***(2013.01)i; ***H01G 11/18***(2013.01)i; ***H01G 11/30***(2013.01)i
FI: H01M4/62 Z; H01G11/06; H01G11/30; H01G11/18

According to International Patent Classification (IPC) or to both national classification and IPC

**B. FIELDS SEARCHED**

Minimum documentation searched (classification system followed by classification symbols)

H01M4/62; H01G11/06; H01G11/18; H01G11/30

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2016-62778 A (TOYOTA MOTOR CORP) 25 April 2016 (2016-04-25) entire text, all drawings | 1-6 |
| A | WO 2019/021891 A1 (ZEON CORP) 31 January 2019 (2019-01-31) entire text | 1-6 |
| A | WO 2020/040031 A1 (ZEON CORP) 27 February 2020 (2020-02-27) entire text, all drawings | 1-6 |
| A | WO 2020/196114 A1 (ZEON CORP) 01 October 2020 (2020-10-01) entire text, all drawings | 1-6 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **04 November 2021** | **16 November 2021** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br>Telephone No. |

Form PCT/ISA/210 (second sheet) (January 2015)

**INTERNATIONAL SEARCH REPORT**
**Information on patent family members**

International application No.
**PCT/JP2021/038308**

| Patent document cited in search report | Publication date (day/month/year) | Patent family member(s) | Publication date (day/month/year) |
|---|---|---|---|
| JP 2016-62778 A | 25 April 2016 | (Family: none) | |
| WO 2019/021891 A1 | 31 January 2019 | US 2020/0176782 A1<br>entire text<br>EP 3660953 A1<br>CN 110870103 A<br>KR 10-2020-0037213 A | |
| WO 2020/040031 A1 | 27 February 2020 | EP 3843176 A1<br>entire text, all drawings | |
| WO 2020/196114 A1 | 01 October 2020 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2014119315 A1
- JP 2012204303 A